# EUROPEAN PATENT APPLICATION

(11) **EP 4 429 352 A1**
(43) Date of publication of application: **11.09.2024**
(21) Application number: 21962904.5
(22) Date of filing: 04.11.2021
(51) Int. Cl.: H04W 72/04, H04L 5/00, H04L 1/18

(54) **SIGNAL SENDING METHOD AND APPARATUS, AND SIGNAL RECEIVING METHOD AND APPARATUS**

(71) Applicant: FUJITSU LIMITED, Kawasaki-shi, Kanagawa 211-8588 (JP)
(72) Inventor: JIANG, Qinyan, Beijing 100022 (CN); ZHANG, Jian, Beijing 100022 (CN); CHEN, Zhe, Beijing 100022 (CN); ZHANG, Lei, Beijing 100022 (CN)
(74) Representative: Haseltine Lake Kempner LLP
(86) International application number: PCT/CN2021/128823
(87) International publication number: WO 2023/077387

(57) **Abstract**

The embodiments of the present disclosure provide a method for transmitting signals, a method for receiving signals and an apparatus thereof, the method for transmitting signals comprises: a terminal equipment receives first downlink control information (DCI) and physical downlink shared channels (PDSCHs) scheduled by the first DCI, the first DCI being used to schedule multiple PDSCHs; the terminal equipment transmits at a first time-domain position, hybrid automatic repeat request acknowledgement (HARQ-ACK) information to which a PDSCH scheduled by the first DCI correspond.

## Description

### TECHNICAL FIELD

The embodiments of the present disclosure relate to the technical field of communications.

### BACKGROUND

A Physical Downlink Shared Channel (PDSCH) is one of physical downlink channels in wireless communication systems, and is used to carry downlink data. The PDSCH may be dynamically scheduled via downlink control information (DCI) or semi-persistent scheduled (SPS). For a situation in which the PDSCH is dynamically scheduled via DCI, in a current new radio (NR) system, a plurality of DCI formats for scheduling the PDSCH are defined, such as DCI format 1_0, DCI format 1_1, DCI format 1_2, for different DCI formats, specific information included in the DCI and/or size are different, so as to meet different scheduling demands. On the other hand, in terms of the number of PDSCHs scheduled by DCI, currently, one DCI may only schedule one PDSCH.

It should be noted that the above introduction to the technical background is just to facilitate a clear and complete description of the technical solutions of the present disclosure, and is elaborated to facilitate the understanding of persons skilled in the art. It cannot be considered that the above technical solutions are known by persons skilled in the art just because these solutions are elaborated in the Background of the present disclosure.

### SUMMARY OF INVENTION

The inventor finds that in a current NR system, one DCI may only schedule one PDSCH. In some circumstances, for a terminal equipment, this scheduling mode may have a problem of a high DCI or Physical Downlink Control Channel (PDCCH) monitoring burden, which leads to high complexity and high power consumption of a device.

For example, how to support a NR system to work at higher frequencies (above 52.6 GHz) is currently being studied, and data transmission at higher frequencies will face more serious problems such as phase noise. Therefore, in order to overcome problems such as phase noise, it needs to adopt larger subcarrier intervals (such as 240 kHz, 480 kHz, 960kHz, etc.) to support data transmission at higher frequencies, while larger subcarrier intervals mean shorter symbol lengths, which also means shorter slot lengths. If the above scheduling mode in which one PDSCH is scheduled via one DCI is still adopted so that a terminal equipment (UE) can receive at least one PDSCH in each slot, the UE will need to monitor the DCI in each slot. In this way, in a case where the larger subcarrier intervals mentioned above are adopted, since a slot length becomes shorter, the number of times of DCI monitoring by the UE in a unit absolute time (such as 1 ms) will increase, which means that the DCI monitoring burden of the UE will increase, and the implementation complexity and power consumption of the UE will also increase correspondingly.

For at least one of the above problems, the embodiments of the present disclosure provide a method for transmitting signals, a method for receiving signals and an apparatus thereof, feedback of corresponding HARQ-ACK information is supported while supporting scheduling multiple PDSCHs via one DCI.

According to one aspect of the embodiments of the present disclosure, an apparatus for transmitting signals is provided, configured in a terminal equipment, the apparatus comprises:
a receiving unit configured to receive first downlink control information (DCI) and physical downlink shared channels (PDSCHs) scheduled by the first DCI, the first DCI being used to schedule multiple PDSCHs; and
a transmitting unit configured to, at a first time-domain position, transmit hybrid automatic repeat request acknowledgement (HARQ-ACK) information to which the PDSCHs scheduled by the first DCI correspond.

According to another aspect of the embodiments of the present disclosure, an apparatus for receiving signals is provided, configured in a network device, the apparatus comprises:
a transmitting unit configured to transmit first downlink control information (DCI) and physical downlink shared channels (PDSCHs) scheduled by the first DCI, the first DCI being used to schedule multiple PDSCHs; and
a receiving unit configured to, at a first time-domain position, receive hybrid automatic repeat request acknowledgement (HARQ-ACK) information to which the PDSCHs scheduled by the first DCI correspond.

According to further aspect of the embodiments of the present disclosure, an apparatus for transmitting signals is provided, configured in a network device, the apparatus comprises:
a transmitting unit configured to transmit first indication information and/or third indication information to a terminal equipment, the first indication information being used to configure a value range corresponding to a first information field of a first DCI, and the third indication information being used to configure a time-domain resource assignment table for supporting scheduling of multiple PDSCHs via one DCI, the time-domain resource assignment table corresponding to the first DCI.

According to another aspect of the embodiments of the present disclosure, an apparatus for receiving signals is provided, configured in a terminal equipment, the apparatus comprises:
a receiving unit configured to receive first indication information and/or third indication information transmitted by a network device, the first indication information being used to configure a value range corresponding to a first information field of a first DCI, and the third indication information being used to configure a time-domain resource assignment table for supporting scheduling of multiple PDSCHs via one DCI, the first DCI applying the time-domain resource assignment table.

One of advantageous effects of the embodiments of the present disclosure lies in: according to the embodiments of the present disclosure, feedback of corresponding HARQ-ACK information is supported while supporting scheduling multiple PDSCHs via one DCI.

Referring to the later description and drawings, specific implementations of the present disclosure are disclosed in detail, indicating a manner that the principle of the present disclosure can be adopted. It should be understood that the implementations of the present disclosure are not limited in terms of the scope. Within the scope of the spirit and terms of the appended claims, the implementations of the present disclosure include many changes, modifications and equivalents.

Features that are described and/or shown with respect to one implementation can be used in the same way or in a similar way in one or more other implementations, can be combined with or replace features in the other implementations.

It should be emphasized that the term "comprise/include" when being used herein refers to the presence of a feature, a whole piece, a step or a component, but does not exclude the presence or addition of one or more other features, whole pieces, steps or components.

### BRIEF DESCRIPTION OF DRAWINGS

An element and a feature described in a drawing or an implementation of the present embodiments of the present disclosure can be combined with an element and a feature shown in one or more other drawings or implementations. In addition, in the drawings, similar labels represent corresponding components in several drawings and may be used to indicate corresponding components used in more than one implementation.
FIG. 1 is a schematic diagram of a communication system in the embodiments of the present disclosure;
FIG. 2a and FIG. 2b are schematic diagrams of two examples in which one DCI indicates four PDSCHs;
FIG. 3a to FIG. 3b are schematic diagrams of several examples of a time unit;
FIG. 4a and FIG. 4b are schematic diagrams of two examples in which one DCI schedules multiple PDSCHs;
FIG. 5 is a schematic diagram of a method for transmitting signals in the embodiments of the present disclosure;
FIG. 6 to FIG. 15 are schematic diagrams of several examples of DCI formats;
FIG. 16 is a schematic diagram of a method for receiving signals in the embodiments of the present disclosure;
FIG. 17 is a schematic diagram of a method for transmitting signals in the embodiments of the present disclosure;
FIG. 18 is a schematic diagram of a method for receiving signals in the embodiments of the present disclosure;
FIG. 19 is a schematic diagram of an example of an apparatus for transmitting signals in the embodiments of the present disclosure;
FIG. 20 is a schematic diagram of an example of an apparatus for receiving signals in the embodiments of the present disclosure;
FIG. 21 is a schematic diagram of an example of an apparatus for transmitting signals in the embodiments of the present disclosure;
FIG. 22 is a schematic diagram of an example of an apparatus for receiving signals in the embodiments of the present disclosure;
FIG. 23 is a schematic diagram of a terminal equipment in the embodiments of the present disclosure;
FIG. 24 is a schematic diagram of composition of a network device in the embodiments of the present disclosure.

### DETAILED DESCRIPTION

Referring to the drawings, through the following Specification, the aforementioned and other features of the present disclosure will become obvious. The Specification and the figures specifically disclose particular implementations of the present disclosure, showing partial implementations which can adopt the principle of the present disclosure. It should be understood that the present disclosure is not limited to the described implementations, on the contrary, the present disclosure includes all the modifications, variations and equivalents falling within the scope of the attached claims.

In the embodiments of the present disclosure, the term "first" and "second", etc. are used to distinguish different elements in terms of appellation, but do not represent a spatial arrangement or time sequence, etc. of these elements, and these elements should not be limited by these terms. The term "and/or" includes any and all combinations of one or more of the associated listed terms. The terms "include", "comprise" and "have", etc. refer to the presence of stated features, elements, members or components, but do not preclude the presence or addition of one or more other features, elements, members or components.

In the embodiments of the present disclosure, the singular forms "a/an" and "the", etc. include plural forms, and should be understood broadly as "a kind of" or "a type of", but are not defined as the meaning of "one"; in addition, the term "the" should be understood to include both the singular forms and the plural forms, unless the context clearly indicates otherwise. In addition, the term "according to" should be understood as "at least partially according to......", the term "based on" should be understood as "at least partially based on......", unless the context clearly indicates otherwise.

In the embodiments of the present disclosure, the term "a communication network" or "a wireless communication network" may refer to a network that meets any of the following communication standards, such as Long Term Evolution (LTE), LTE-Advanced (LTE-A), Wideband Code Division Multiple Access (WCDMA), HighSpeed Packet Access (HSPA) and so on.

And, communication between devices in a communication system can be carried out according to a communication protocol at any stage, for example may include but be not limited to the following communication protocols: 1G (generation), 2G, 2.5G, 2.75G, 3G, 4G, 4.5G, 5G, New Radio (NR) and so on, and/or other communication protocols that are currently known or will be developed in the future.

In the embodiments of the present disclosure, the term "a network device" refers to, for example, a device that accesses a terminal equipment in a communication system to a communication network and provides services to the terminal equipment. The network device may include but be not limited to the following devices: a Base Station (BS), an Access Point (AP), a Transmission Reception Point (TRP), a broadcast transmitter, a Mobile Management Entity (MME), a gateway, a server, a Radio Network Controller (RNC), a Base Station Controller (BSC) and so on.

The base station may include but be not limited to: node B (NodeB or NB), evolution node B (eNodeB or eNB) and a 5G base station (gNB), etc., and may further includes Remote Radio Head (RRH), Remote Radio Unit (RRU), a relay or a low power node (such as femeto, pico, etc.), Integrated Access and Backhaul (IAB) node or IAB-DU or IAB-donor. And the term "base station" may include some or all functions of base station, each base station may provide communication coverage to a specific geographic region. The term "a cell" may refer to a base station and/or its coverage area, which depends on the context in which this term is used. Where there is no confusion, the terms "cell" and " base station " are interchangeable.

In the embodiments of the present disclosure, the term "User Equipment (UE)" or "Terminal Equipment (TE) or Terminal Device" refers to, for example, a device that accesses a communication network and receives network services through a network device. The terminal equipment can be fixed or mobile, and can also be referred to as Mobile Station (MS), a terminal, Subscriber Station (SS), Access Terminal (AT), IAB-MT, a station and so on.

The terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera and so on.

For another example, under a scenario such as Internet of Things (IoT), the terminal equipment may also be a machine or apparatus for monitoring or measurement, for example may include but be not limited to: a Machine Type Communication (MTC) terminal, a vehicle-mounted communication terminal, a Device to Device (D2D) terminal, a Machine to Machine (M2M) terminal and so on.

Moreover, the term "a network side" or "a network device side" refers to a side of a network, may be a base station, and may include one or more network devices as described above. The term "a user side" or "a terminal side" or "a terminal equipment side" refers to a side of a user or terminal, may be a UE, and may include one or more terminal equipment as described above. If it is not specifically mentioned herein, "a device" may refer to a network device, or may refer to a terminal equipment.

In the following description, without causing confusion, the terms "uplink control signal" and "Uplink Control Information (UCI)" or "Physical Uplink Control Channel (PUCCH)" are interchangeable, the terms "uplink data signal" and "uplink data information" or "Physical Uplink Shared Channel (PUSCH)" are interchangeable; the terms "downlink control signal" and "Downlink Control Information (DCI)" or "Physical Downlink Control Channel (PDCCH)" are interchangeable, the terms "downlink data signal" and "downlink data information" or "Physical Downlink Shared Channel (PDSCH)" are interchangeable.

Moreover, transmitting or receiving a PUSCH may be understood as transmitting or receiving uplink data carried by a PUSCH, transmitting or receiving a PUCCH may be understood as transmitting or receiving uplink information (such as UCI) carried by a PUCCH, transmitting or receiving a PDSCH may be understood as transmitting or receiving downlink data carried by a PDSCH, transmitting or receiving a PDCCH may be understood as transmitting or receiving downlink information (such as DCI) carried by a PDCCH.

In the embodiments of the present disclosure, higher layer signaling may be e.g. radio resource control (RRC) signaling; the RRC signaling includes, for example, an RRC message, for example includes a master information block (MIB), system information, and a dedicated RRC message; or an RRC information element (RRC IE); or an information field included in an RRC message or an RRC information element (or an information field included in the information field). The higher layer signaling, for example, may further be Medium Access Control (MAC) signaling; or called a MAC control element (MAC CE). However, the present disclosure is not limited to these.

The scenarios of the embodiments of the present disclosure are described through the following examples, however the present disclosure is not limited to these.

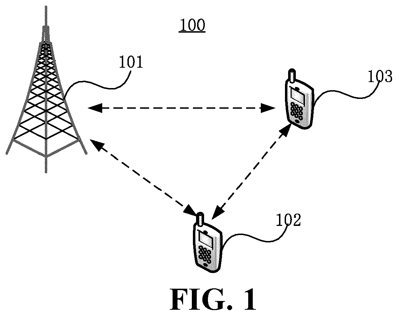

FIG. 1 is a schematic diagram of a communication system in the embodiments of the present disclosure, schematically describes situations by taking a terminal equipment and a network device as examples, as shown in FIG. 1, a communication system 100 may include a network device 101 and terminal equipments 102, 103. For simplicity, FIG. 1 only takes two terminal equipments and one network device as examples for description, however the embodiments of the present disclosure are not limited to this.

In the embodiments of the present disclosure, transmission of existing or further implementable services can be carried out between the network device 101 and the terminal equipments 102, 103. For example, these services may include but be not limited to: enhanced Mobile Broadband (eMBB), massive Machine Type Communication (mMTC), Ultra-Reliable, Low-Latency Communication (URLLC) and relevant communication of a terminal equipment with reduced capacities, etc.

It is worth noting that FIG. 1 shows that two terminal equipments 102 and 103 are within the coverage of network device 101, but the present disclosure is not limited to this. The two terminal equipments 102 and 103 may be outside the coverage of the network device 101, or one terminal equipment 102 may be within the coverage of the network device 101 and the other terminal equipment 103 may be outside the coverage of the network device 101.

Some concepts involved in the embodiments of the present disclosure are described below.

In the embodiments of the present disclosure, a HARQ-ACK codebook may be a Type-1 HARQ-ACK codebook, a Type-2 HARQ-ACK codebook, or a Type-3 HARQ-ACK codebook, etc.

Basic ideas for generation of the above three types of HARQ-ACK codebooks are different.

For example, the Type-1 HARQ-ACK codebook is generated mainly based on semi-static parameters (predefined, or configured by RRC signaling) related to PDSCH scheduling and HARQ-ACK information feedback, its codebook size is generally independent of dynamic scheduling, it has stronger robustness and can avoid that because a UE misses to detect DCI, HARQ-ACK information may not be correctly fed back.

For another example, the Type-2 HARQ-ACK codebook is generated mainly based on dynamic scheduling, its codebook size is generally determined according to dynamic scheduling. Thus, compared with Type-1, the codebook size can be reduced and the overhead of uplink control signaling can be reduced. However, because a UE misses to detect DCI, HARQ-ACK information may not be correctly fed back.

For another example, the Type3 HARQ-ACK codebook mainly feeds back HARQ-ACK information for a HARQ process, its codebook size is generally related to the number of configured HARQ processes.

A HARQ-ACK codebook type adopted by a UE may be predefined, or indicated by RRC signaling, or indicated by DCI. And, types of HARQ-ACK codebooks adopted in different situations may be different, so as to meet different feedback demands of HARQ-ACK information.

In the embodiments of the present disclosure, transmission blocks carried by different PDSCHs are same or different. In the following text, "multiple PDSCHs" or "at least two PDSCHs" or "more than one PDSCH" scheduled by one DCI refers to different PDSCHs carrying different transmission blocks. More specifically, transmission blocks carried by different PDSCHs may correspond to same or different HARQ processes, wherein the different HARQ processes are identified by different HARQ processes.

In the embodiments of the present disclosure, DCI needs to indicate a time-domain resource of a PDSCH when scheduling the PDSCH. Generally, the DCI includes an information field (or simply referred to as a second information field) for indicating time-domain resources of a PDSCH, the information field indicates time-domain resources of the PDSCH based on an applied time domain resource assignment (TDRA) table (or called a PDSCH TDRA table, or simply referred to as a TDRA table). The second information field is, for example, a time domain resource assignment field. Specifically, the information field may indicate an index of a time-domain resource assignment configuration (or simply referred to as a TDRA configuration) in a TDRA table. For example, if the above TDRA table is a TDRA table applied by the DCI, this second information field indicates time-domain resources of a PDSCH by indicating an index (a row index, for example, a value of the row index is greater than or equal to 1) of a TDRA configuration in the TDRA table applied by the DCI, in other words, the DCI schedules the PDSCH by indicating the TDRA configuration in the TDRA table applied by it. For example, the value m (assuming that m is an integer greater than or equal to 0) of a second information field of the DCI corresponds to indicating a TDRA configuration with an index being m+1 (that is, row m+1) in the TDRA table applied by the DCI. The time domain resource assignment table is predefined, or configured by RRC signaling. In a case where the TDRA table is configured by RRC signaling, for example, an index value of the m+1th TDRA configuration, as configured by RRC signaling, is m+1, that is, when a value of the second information field is m, it corresponds to the m+1th TDRA configuration as configured by RRC signaling.

In the embodiments of the present disclosure, the time domain resource assignment table includes at least one row. In the following text, for ease of description, a row is called a TDRA configuration, that is, the TDRA table includes at least one TDRA configuration. One TDRA configuration includes at least one time domain resource configuration (or called a PDSCH time domain resource configuration), which at least includes a symbol position (starting symbol + length) configuration in a slot; moreover, one PDSCH TDRA configuration may further include at least one slot offset (for example, called K0) configuration, K0 represents a slot offset between a PDSCH and a PDCCH, and the K0 configuration is included or not included in the PDSCH time domain resource configuration; the one TDRA configuration may further include other information, and such other information is included or not included in the PDSCH time domain resource configuration, the embodiments of the present disclosure is not limited to this. Regarding the symbol position configuration in the slot, it includes, for example, a start and length indicator (SLIV), the SLIV corresponds to a valid combination of a starting symbol (S) and a length (L), or, for example, it corresponds to a starting symbol configuration and a length configuration, the starting symbol configuration and the length configuration are a valid combination.

In some embodiments, in order to support scheduling of multiple PDSCHs via one DCI, it may be supported to configure a time domain resource assignment table (or simply referred to as a first time domain resource assignment table) for supporting scheduling of multiple (i.e., more than one) PDSCHs via one DCI via new RRC signaling (such as *pdsch-TimeDomainAllocationListForMultiPDSCH,* or *pdsch-TimeDomainAllocationListForMultiPDSCH-r17*) (for example called third indication information). The first time domain resource assignment table includes at least one time domain resource assignment configuration (or called a first time domain resource assignment configuration) for scheduling multiple (i.e., more than one) PDSCHs. The first time domain resource assignment configuration, for example, includes multiple SLIVs, each of which corresponds to one PDSCH respectively.

In some embodiments, the first time domain resource assignment configuration includes one time domain offset K0 configuration, K0 represents a slot offset between the first PDSCH and a PDCCH carrying a DCI that schedules the PDSCH.

In some embodiments, the first time domain resource assignment configuration includes multiple (that is, more than one) K0 configurations. For example, the configuration includes multiple K0s, each K0 corresponds to one PDSCH respectively, respectively representing a slot offset between a corresponding PDSCH and a PDCCH for scheduling the PDSCH. Optionally, the K0 may be included in a PDSCH time domain resource configuration, and corresponds to each SLIV one by one, thereby slot positions of multiple PDSCHs can be determined successively.

In some embodiments, if one first time domain resource assignment configuration is used to schedule multiple PDSCHs in multiple consecutive slots, the configuration includes one time domain offset K0 configuration, K0 for example represents a slot offset between the first PDSCH and a PDCCH carrying a DCI that schedules the PDSCH. If one first time domain resource assignment configuration is used to schedule multiple PDSCHs in multiple discontinuous slots, the first time domain resource assignment configuration includes multiple (that is, more than one) time domain offset K0 configurations. For example, the configuration includes multiple K0s, each K0 corresponds to one PDSCH respectively, respectively representing a slot offset between a corresponding PDSCH and a PDCCH for scheduling the PDSCH. Optionally, the K0 may be included in a PDSCH time domain resource configuration, and corresponds to each SLIV one by one, thereby slot positions of multiple PDSCHs can be determined successively.

In some embodiments, the terminal equipment determines a PDSCH time domain resource assignment table applied by a DCI (or DCI with DL grant/assignment). The terminal equipment may further determine a PDSCH time domain resource assignment table applied by a DCI according to a first list, a column of the first list corresponds to the aforementioned third indication information (such as *pdsch-TimeDomainAllocationListForMultiPDSCH,* or *pdsch-TimeDomainAllocationListForMultiPDSCH-r17*) used for configuring a PDSCH TDRA table for supporting scheduling of multiple PDSCHs via one DCI. The third indication information is for example included in PDSCH-Config. That is, the terminal equipment determines a PDSCH time domain resource assignment table applied by a DCI used for scheduling a PDSCH, from a PDSCH time domain resource assignment (TDRA) table that is predefined or configured via higher layer signaling according to the first list. Taking the DCI being DCI format 1_0 and 1_1 as an example, Table 1 below is an example table for the first list.

**Table 1: Applicable PDSCH Time Domain Resource Assignment for DCI format 1 0 and DCI format 1_1**

| **RNTI** | **PDCCH search space** | **SS/PBCH block and CORESET multiplexing pattern** | ***PDSCH-*ConfigComm *on* includes *pdsch-TimeDomain AllocationList*** | ***PDSCH-Config* includes *pdsch-TimeDomai nAllocation List*** | ***PDSCH-Config* includes *pdsch-TimeDomainAll ocationListFor MultiPDSCH-r17*** | **PDSCH time domain resource allocation *to* apply** |
|---|---|---|---|---|---|---|
| SI-RNTI | Type0 common | 1 | - | - | - | Default A for normal CP |
| | | 2 | - | - | - | Default B |
| | | 3 | - | - | - | Default C |
| SI-RNTI | Type0A common | 1 | No | - | - | Default A |
| | | 2 | No | - | - | Default B |
| | | 3 | No | - | - | Default C |
| | | 1,2,3 | Yes | - | - | *pdsch-TimeDomainA llocationList provided in PDSCH-ConfigCommo n* |
| RA-RNTI, MSGB-RNTI, TC-RNTI | Type1 common | 1, 2, 3 | No | - | - | Default A |
| | | 1, 2, 3 | Yes | - | - | *pdsch-TimeDomainA* |
| | | | | | | *llocationList* provided in *PDSCH-ConfigCommo n* |
| P-RNTI | Type2 common | 1 | No | - | - | Default A |
| | | 2 | No | - | - | Default B |
| | | 3 | No | - | - | Default C |
| | | 1, 2, 3 | Yes | - | - | *pdsch-TimeDomainA llocationList provided in PDSCH-ConfigCommo n* |
| C-RNTI, MCS-C-RNTI, CS-RNTI | Any common search space associated with CORESET 0 | 1, 2, 3 | No | - | - | Default A |
| | | 1, 2, 3 | Yes | - | - | *pdsch-TimeDomainA llocationList* provided in *PDSCH-ConfigCommo n* |
| C-RNTI, MCS-C-RNTI, CS-RNTI | Any common search space not associated with CORESET 0 | 1,2,3 | No | No | - | Default A |
| | | 1,2,3 | Yes | No | - | *pdsch-TimeDomainA llocationList* provided in *PDSCH-ConfigCommo n* |
| | UE specific search space | | | | | |
| | | 1,2,3 | No/Yes | Yes | - | *pdsch-TimeDomainA llocationList* provided in *PDSCH-Config* |
| | | 1,2,3 | No/Yes | - | Yes | *pdsch-TimeDomainA llocationListF orMultiPDSC H-r17* provided in *PDSCH-Config* |

In the embodiments of the present disclosure, DCI indicates multiple (i.e., more than one) PDSCHs, which means that the DCI (or a second information field in the DCI) indicates a time domain resource assignment configuration used to schedule more than one PDSCH. The time domain resource assignment configuration has been described in the preceding text, and will not be repeated here.

In the embodiments of the present disclosure, DCI schedules multiple (i.e., more than one) PDSCHs, which means that the DCI indicates multiple PDSCHs, or means that multiple PDSCHs indicated by the DCI include more than one valid PDSCH, or means that there is a PDSCH with a corresponding HARQ process (or HARQ process ID) in multiple PDSCHs indicated by the DCI. A valid PDSCH and/or a PDSCH with a corresponding HARQ process, for example, refer to a PDSCH that does not overlap with a semi-statically configured uplink symbol and/or a dynamically configured uplink symbol and/or a symbol where semi-statically configured uplink transmission is located and/or a reserved symbol and/or an interval symbol. The valid PDSCH is same as or different from the PDSCH with the corresponding HARQ process. For different cases, for example, the valid PDSCH e.g. refers to a PDSCH that does not overlap with a semi-statically configured uplink symbol, and the PDSCH with the corresponding HARQ process e.g. refers to a PDSCH that does not overlap with a semi-statically configured uplink symbol and/or a dynamically configured uplink symbol. In other words, if a PDSCH indicated by the DCI overlaps with a semi-statically configured uplink symbol and/or a dynamically configured uplink symbol and/or a symbol where semi-statically configured uplink transmission is located and/or a reserved symbol and/or an interval symbol, the PDSCH is an invalid PDSCH, and/or the PDSCH does not have a corresponding HARQ process (or HARQ process ID).

For example, assuming that a valid PDSCH and/or a PDSCH with a corresponding HARQ process refer(s) to a PDSCH that does not overlap with a semi-statically configured uplink symbol, if one PDSCH overlaps with / conflicts with the semi-statically configured uplink symbol, the PDSCH does not have a corresponding HARQ process (or HARQ process ID). Generally, a base station will not transmit this PDSCH, and a UE will not receive this PDSCH. On the contrary, if the PDSCH does not overlap with / conflict with the semi-statically configured uplink symbol, the PDSCH has a corresponding HARQ process (or HARQ process ID).

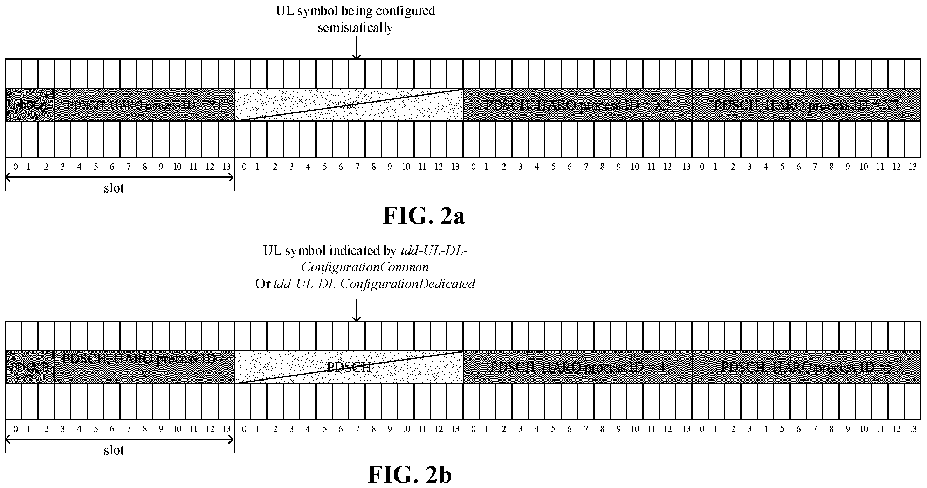

As shown in FIG. 2a, the DCI (PDCCH) indicates 4 PDSCHs. Since the second PDSCH indicated by the DCI overlaps with a semi-statically configured uplink symbol, this PDSCH is an invalid PDSCH, and there is no corresponding HARQ process (or HARQ process ID), the other three PDSCHs do not overlap with the semi-statically configured uplink symbol, are valid PDSCHs and have a corresponding HARQ process (or HARQ process ID). HARQ process ID indicated by the DCI (or HARQ process number field in the DCI) corresponds to a first PDSCH (or a first valid PDSCH) scheduled by the DCI.

Further, as shown in FIG. 2b, assuming that HARQ process ID indicated by the DCI is 3, since the first PDSCH indicated by the DCI does not overlap with the semi-statically configured uplink symbol, this PDSCH is the first PDSCH scheduled by the DCI, and corresponds to HARQ process ID indicated by the DCI. HARQ process IDs of subsequent PDSCHs are added by 1 in a scheduling sequence. The second PDSCH indicated by the DCI overlaps with the semi-statically configured uplink symbol, there is no corresponding HARQ process, HARQ process ID is not added by 1, thus HARQ process IDs corresponding to the third and fourth PDSCHs indicated by the DCI are 4 (3+1) and 5 (4+1) successively.

In some embodiments, one time unit (such as a symbol, a slot, a subframe) may be configured by signaling (such as the following indication information for (semi-statically/dynamically) configuring a transmission direction) as uplink, downlink or flexible, wherein a time unit that is not explicitly configured by signaling as uplink or downlink is configured (or defaulted) as a flexible time unit.

In some embodiments, if one time unit including multiple symbols is configured as uplink, downlink or flexible, all symbols of the time unit are uplink, downlink or flexible.

In some embodiments, a UE receives indication information for (semi-statically) configuring (or indicating) a transmission direction. The above-mentioned semi-statically configured uplink symbol is a symbol configured by the indication information for semi-statically configuring a transmission direction as uplink. The indication information e.g. is RRC signaling (such as *tdd-UL-DL-ConfigurationCommon* and/or *tdd-UL-DL-ConfigurationDedicated*)*.* For example, the above-mentioned semi-statically configured UL symbol refers to a UL symbol configured by the RRC signaling. That is, assuming that a valid PDSCH and/or a PDSCH with a corresponding HARQ process refer(s) to a PDSCH that does not overlap with a semi-statically configured uplink symbol, the valid PDSCH and/or the PDSCH with the corresponding HARQ process is a PDSCH that does not overlap with / conflict with an uplink symbol configured by *tdd-UL-DL-ConfigurationCommon* and/or *tdd-UL-DL-ConfigurationDedicated.*

In some embodiments, a UE receives indication information for (dynamically) configuring a transmission direction. The above-mentioned dynamically configured uplink symbol is a symbol configured by the indication information for dynamically configuring a transmission direction as uplink. The indication information e.g. is a physical layer signaling (such as DCI format 2_0, or a slot format indicator (SFI) in DCI format 2_0). Generally, the indication information cannot overwrite a transmission direction of a symbol that is semi-statically configured as DL or UL, but it is not limited to this. For example, the above-mentioned dynamically configured UL symbol refers to a UL symbol configured by the physical layer signaling. That is, assuming that a valid PDSCH and/or a PDSCH with a corresponding HARQ process refer(s) to a PDSCH that does not overlap with a dynamically configured uplink symbol, the valid PDSCH and/or the PDSCH with the corresponding HARQ process is a PDSCH that does not overlap with / conflict with an uplink symbol configured by DCI format 2_0. Assuming that a valid PDSCH and/or a PDSCH with a corresponding HARQ process refer(s) to a PDSCH that does not overlap with a semi-statically configured uplink symbol and a dynamically configured uplink symbol, the valid PDSCH and/or the PDSCH with the corresponding HARQ process is a PDSCH that does not overlap with / conflict with an uplink symbol configured by *tdd-UL-DL-ConfigurationCommon* and/or *tdd-UL-DL-ConfigurationDedicated* and does not overlap with / conflict with an uplink symbol configured by DCI format 2_0. It is the same for other combinations, they are not listed here.

In some embodiments, semi-statically configured uplink transmission e.g. is CG PUSCH (Type1 or Type2) or PRACH or SRS or PUCCH.

In some embodiments, 'semi-statically configured', for example, means configured via a higher layer signaling.

In some embodiments, a reserved symbol and/or an interval symbol, for example, is/are predefined, or configured by a higher layer signaling. The reserved symbol and/or interval symbol, for example, is/are used to reduce inter-cell interference and/or for uplink/downlink switching.

In the embodiments of the present disclosure, for convenience of illustration, the time-domain position where HARQ-ACK information is fed back or transmitted is called a first time-domain position, its unit may be a slot, a subslot, or a symbol. The first time-domain position, for example, is UL slot n+k, wherein UL slot n is called a second time-domain position, k is called a first value.

In the embodiments of the present disclosure, the first time-domain position, for example, is indicated (or configured/provided) by RRC signaling and/or DCI. For example, the RRC signaling and/or DCI indicate(s) the first time-domain position by indicating the first value.

The illustration is made below by combining with specific situations.

Situation 1, a UE detects (has detected) DCI (or DCI format) that schedules a PDSCH (or PDSCH reception), the DCI schedules one or more (that is, more than one) PDSCHs, the PDSCH(s) scheduled by the DCI end(s) in a DL slot *n_{D}.* For example, the DCI schedules one PDSCH, the PDSCH ends in a DL slot *n_{D}.* For another example, the DCI schedules more than one PDSCH, the last PDSCH ends in a DL slot *n_{D}*, that is, multiple PDSCHs scheduled by the DCI end in a DL slot *n_{D}.* The DCI indicates or does not indicate SPS PDSCH release, and/or, the DCI indicates or does not indicate SCell dormant, and/or the DCI requests or does not request Type-3 HARQ-ACK codebook report.

Situation 2, a UE detects (has detected) DCI (or DCI format) that indicates SPS PDSCH release, a corresponding PDCCH (or PDCCH reception) (used to carry the DCI) ends in a DL slot *n_{D}.* The DCI schedules one or more PDSCHs or does not schedule a PDSCH.

Situation 3, a UE detects (has detected) DCI (or DCI format) that indicates SCell dormant, a corresponding PDCCH (or PDCCH reception) (used to carry the DCI) ends in a DL slot *n_{D}.* The DCI schedules one or more PDSCHs or does not schedule a PDSCH.

Situation 4, a UE detects (has detected) DCI (or DCI format) that requests Type-3 HARQ-ACK codebook report, a corresponding PDCCH (or PDCCH reception) (used to carry the DCI) ends in a DL slot *n_{D}.* The DCI schedules one or more PDSCHs or does not schedule a PDSCH.

In the above situations 1 to 4, the UE transmits/provides corresponding HARQ-ACK information (to a base station) in PUCCH transmission within a UL slot n+k, where, k e.g. is the number of first time units (such as slots), and is indicated by *PDSCH-to-HARQ_feedback timing indicator field* (if present) in the DCI, or is provided by *dl-DataToUL-ACK, dl-DataToUL-ACK-r16*, or *dl-DataToUL-ACKForDCIFormat1_2* (for the latter, *PDSCH-to-HARQ_feedback timing indicator field* is present or absent in the DCI format, if present, the UE ignores this information field).

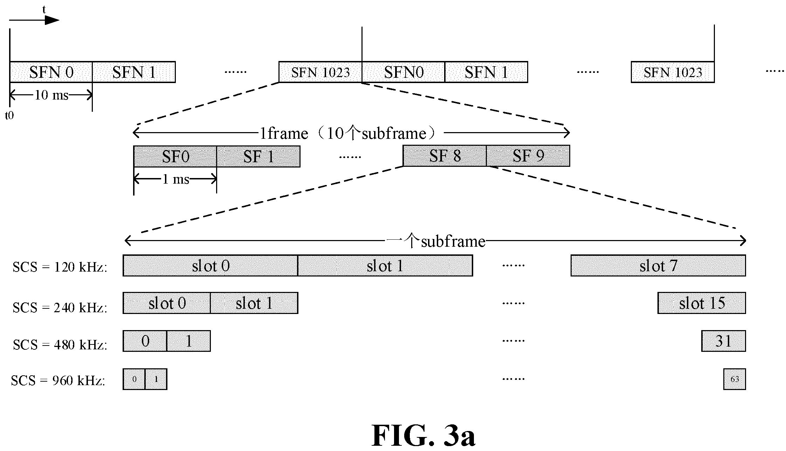

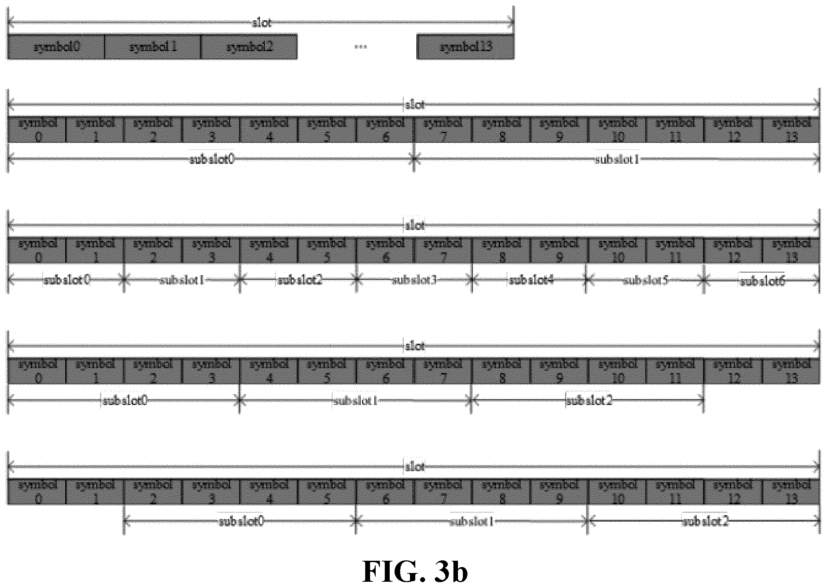

In some embodiments, the first time unit is, for example, a slot and/or a subslot and/or a symbol. Symbols included in the subslot is a subset of symbols included in a corresponding slot. In some embodiments, without causing confusion, a subslot may also be called a slot. FIG. 3a and FIG. 3b are schematic diagrams of some examples of a time unit.

Situation 5, for a SPS PDSCH (or SPS PDSCH reception) that ends in a DL slot *n_{D}*, a UE transmits a PUCCH in a UL slot n+k, where, k is provided by *PDSCH-to-HARQ_feedback timing indicator field* (if present) in the DCI (or DCI format) activating SPS PDSCH reception.

In the embodiments of the present disclosure, a second time-domain position is, for example, predefined, and/or indicated by a base station.

The second time-domain position is, for example, an uplink slot that overlaps (or superposes) with a PDCCH or PDSCH (scheduled by DCI, or SPS), or a last uplink slot that overlaps with a PDCCH or PDSCH (scheduled by DCI, or SPS), or a last uplink slot that overlaps with a downlink slot where a PDCCH or PDSCH (scheduled by DCI, or SPS) is located, or an uplink slot that overlaps with an end position of a PDCCH or PDSCH (scheduled by DCI, or SPS), or a last uplink slot that overlaps with a downlink slot where an end position of a PDCCH or PDSCH (scheduled by DCI, or SPS) is located. In a case where the DCI schedules more than one PDSCH, the second time-domain position is, for example, a last UL slot that overlaps with an indicated or scheduled last PDSCH (or the last PDSCH reception), or a last UL slot that overlaps with a DL slot *n_{D}* of an indicated or scheduled last PDSCH (or the last PDSCH reception), or a last UL slot that overlaps with a last DL slot *n_{D}* of an indicated or scheduled PDSCH (or the PDSCH reception).

The uplink slot is based on an SCS used to transmit corresponding HARQ-ACK information, and the downlink slot corresponding to the PDCCH or PDSCH is based on an SCS used to transmit the PDCCH or PDSCH, respectively.

In some embodiments, an SCS used to transmit a PDCCH, an SCS used to transmit a PDSCH, and an SCS used to transmit HARQ-ACK information are the same or different.

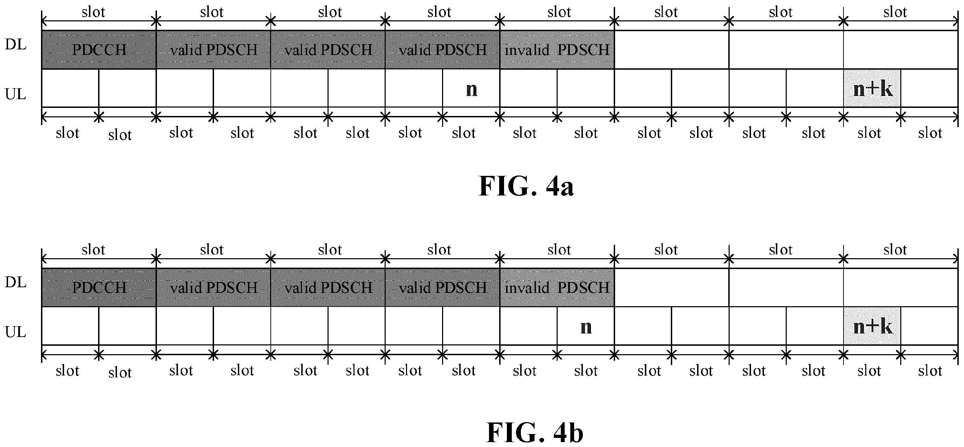

FIG. 4a and FIG. 4b are schematic diagrams of two examples in which one DCI schedules multiple PDSCHs. FIG. 4a shows a situation assuming that the above last PDSCH is a last valid PDSCH scheduled by the DCI, and FIG. 4b shows a situation assuming that the above last PDSCH is a last PDSCH indicated by the DCI, even if the PDSCH is an invalid PDSCH.

The further illustration is made below by combining with specific situations.

In the above situation 1, if the UE is provided with *subslotLengthForPUCCH,* n is the last UL slot (or subslot) that overlaps with PDSCH reception, otherwise, n is the last UL slot (not subslot) that overlaps with a DL slot *n_{D}* used for PDSCH reception. In a case where the DCI indicates or schedules multiple PDSCHs, if the UE is provided with *subslotLengthForPUCCH,* n is the last UL slot (or subslot) that overlaps with an indicated or scheduled last PDSCH (or the last PDSCH reception). Otherwise, n is a last UL slot (not subslot) that overlaps with a DL slot *n_{D}* (used for) of PDSCH (reception), or a last UL slot (not subslot) that overlaps with a DL slot *n_{D}* (used for) of an indicated or scheduled last PDSCH (or the last PDSCH reception), or a last UL slot (not subslot) that overlaps with a last DL slot *n_{D}* (used for) of an indicated or scheduled PDSCH (or the last PDSCH reception).

In the above situations 2 to 4, if the UE is provided with *subslotLengthForPUCCH,* n is the last UL slot (or subslot) that overlaps with corresponding PDCCH reception, otherwise, n is the last UL slot that overlaps with a DL slot *n_{D}* (used for) of a corresponding PDCCH (or PDCCH reception).

In the above situation 5, if the UE is provided with *subslotLengthForPUCCH,* n is the last UL slot (or subslot) that overlaps with SPS PDSCH (or PDSCH reception) reception, otherwise, n is the last UL slot that overlaps with a DL slot *n_{D}* where the SPS PDSCH is located.

In the embodiments of the present disclosure, the first value (k), for example, represents the number of slots and/or the number of subslots and/or the number of symbols. And, the first value may be configured by RRC signaling, and/or indicated by DCI. For example, if a UE is provided with *subslotLengthForPUCCH,* the first value represents the number of subslots, otherwise, the first value represents the number of slots (not the number of subslots).

In some embodiments, the first value is determined according to a first information field in DCI, and/or RRC signaling. The first information field is used to indicate a first value, or the first information field is used to indicate a second value for determining the first value. In other words, the first information field is used to indicate a first time-domain position. When the first information field is used to indicate the second value, a UE, for example, determines the first value based on the second value. In some situations (such as DCI format 1_1, not limited to this), a second value is the first value. In some situations (such as DCI format 1_0, not limited to this), a UE further determines the first value based on a third value. For example, the first value = the second value + the third value. The third value is for example predefined, or indicated by a base station. In some embodiments, without causing confusion (such as a situation in which the second value is the first value), the first value (k) and the second value (k1) may be replaced.

For example, the first information field is called, for example, *PDSCH-to-HARQ_feedback timing indicator field.* A value range of the first value or the second value that can be indicated by the first information field (or a vale range corresponding to the first information field) may be predefined, or configured by RRC signaling. Different DCI formats (or the first information field in different DCI formats) correspond to same or different value ranges. For the situation in which a value range is configured by RRC signaling, for different DCI formats, RRC signaling used to configure the above value ranges are the same or different.

For another example, a value of the first value is configured via RRC signaling directly, and DCI includes or does not include the above first information field used to indicate the first value. In a case where the DCI includes the above first information field, RRC signaling used to directly configure a value of the first value is same as or different from RRC signaling used to configure a value range corresponding to a first information field of the DCI.

The illustration is made below by combining with specific examples.

For DCI format 1_0 for scheduling a PDSCH or activating/deactivating a SPS, the first value is indicated by DCI.

For example, a value range corresponding to values of a first information field is {1, 2, 3, 4, 5, 6, 7, 8}. If the value of the first information field is 0, a corresponding value is 1, if the value of the first information field is 1, the corresponding value is 2, and so on. The corresponding value is the first value, or the corresponding value is the second value, and a UE determines the first value according to the second value.

For DCI format 1_1 for scheduling a PDSCH or activating/deactivating a SPS, the first value is indicated by DCI, or configured by RRC signaling.

For example, the DCI includes a first information field whose values correspond, for example, to a set of values (a set of first or second values) configured by the RRC signaling. Each value in this set of values represents the number of slots and/or the number of subslots and/or the number of symbols, respectively. If the value of the first information field is 0, a corresponding value is a first value in this set of values, if the value of the first information field is 1, the corresponding value is a second value in this set of values, and so on. The RRC signaling here, for example, is *dl-DataToUL-ACK, dl-DataToUL-ACK-r16, dl-DataToUL-ACK-r17,* etc. *dl-DataToUL-ACK-r17,* for example, is for FR2-2, but is not limited to this.

For another example, RRC signaling configures a value (a first value or a second value). The RRC signaling here, for example, is *dl-DataToUL-ACK*, *dl-DataToUL-ACK-r16*, *dl-DataToUL-ACK-r17*, etc. *dl-DataToUL-ACK-r17,* for example, is for FR2-2, but is not limited to this.

For DCI format 1_2 for scheduling a PDSCH or activating/deactivating a SPS, the first value is indicated by DCI, or configured by RRC signaling.

For example, the DCI includes a first information field whose values correspond, for example, to a set of values (a set of first or second values) configured by the RRC signaling. Each value in this set of values represents the number of slots and/or the number of subslots and/or the number of symbols, respectively. The RRC signaling here, for example, is *dl-DataToUL-ACKForDCIFormat1_2*, etc.

For another example, RRC signaling configures a value (a first value or a second value). The RRC signaling here, for example, is *dl-DataToUL-ACKForDCIFormat1_*2, etc.

For DCI requesting Type-3 HARQ-ACK codebook report, such as DCI format 1_1, DCI format 1_2, etc., the first value is indicated by the DCI.

For example, the DCI includes a first information field whose values correspond, for example, to a set of values configured by the RRC signaling. The RRC signaling here, for example, is *dl-DataToUL-ACK, dl-DataToUL-ACK-r16, dl-DataToUL-ACKForDCIFormat1_2*, etc.

Generally, a value corresponding to a first information field in DCI format 1_1 and 1_2 or configured by RRC signaling is the first value, but is not limited to this.

In NR Rel-16, a special value is introduced for the first value. In some situations, for the first value, the RRC signaling (such as *dl-DataToUL-ACK-r16*, corresponding DCI format 1_1) may configure an inapplicable value (hereinafter referred to as a first specific value). A value of the first specific value is -1 for example. When DCI format 1_1 schedules a PDSCH and indicates the first specific value, only after receiving another DCI, a UE can determine a time-domain position (a first time-domain position) for feeding back or transmitting the HARQ-ACK information corresponding to the PDSCH scheduled by the DCI. That is, when DCI format 1_1 indicates the first specific value, it means that this DCI does not indicate a corresponding first time-domain position.

And, in NR Rel-16, one DCI may only schedule one PDSCH. Therefore, current methods for feeding back HARQ-ACK information in a case where the DCI indicates the first specific value are only applicable for a situation in which one DCI schedules one PDSCH. According to existing methods, when a UE receives a DCI that schedules more than one PDSCH and indicates one first specific value, the UE cannot determine whether or how to feed back HARQ-ACK information corresponding to the more than one PDSCH and/or the DCI.

For the above problem, the embodiments of the present disclosure are proposed, and are described in combination with the drawings and the specific implementations.

In the embodiments of the present disclosure, "when......", "in a case where......", "for a situation in which......" and "if......" represent on the basis of one or more conditions or states, etc., in addition, these expressions are interchangeable. Moreover, "indicate" may explicitly contain certain information for notification, or may implicitly notify via certain features, etc. In addition, the expressions "DCI", "DCI format" and "DCI formats" refer to the same meaning, they are interchangeable. In addition, the expressions "may schedule", "can schedule" and "for scheduling" refer to the same meaning, they are interchangeable.

### Embodiments of a first aspect

The embodiments of the present disclosure provide a method for transmitting signals, which will be described from a terminal equipment.

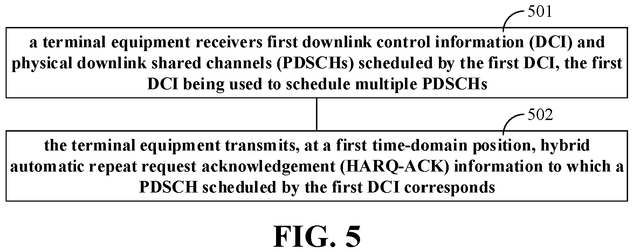

FIG. 5 is a schematic diagram of a method for transmitting signals in the embodiments of the present disclosure, as shown in FIG. 5, the method comprises:
501, a terminal equipment receivers first downlink control information (DCI) and physical downlink shared channels (PDSCHs) scheduled by the first DCI, the first DCI being used to schedule multiple PDSCHs; and
502, the terminal equipment transmits, at a first time-domain position, hybrid automatic repeat request acknowledgement (HARQ-ACK) information to which a PDSCH scheduled by the first DCI corresponds.

It should be noted that the above FIG. 5 only schematically describes the embodiments of the present disclosure, but the present disclosure is not limited to this. For example, an execution step of the operations can be adjusted appropriately, moreover other some operations can be added or reduced. Persons skilled in the art can make appropriate modifications according to the above contents, not limited to the records in the above FIG. 5.

According to the embodiments of the present disclosure, in a case where the first DCI is used to schedule multiple (that is, more than one) PDSCHs, after receiving the first DCI and the PDSCH scheduled by the first DCI, the terminal equipment transmits HARQ-ACK information corresponding to the PDSCH scheduled by the first DCI at a first time-domain position, thereby feedback of corresponding HARQ-ACK information is supported while supporting scheduling of multiple PDSCHs via one DCI.

In some embodiments, the first DCI is used to schedule multiple PDSCHs, which means that the first DCI is able to schedule or can schedule multiple PDSCHs, or the first DCI has a capacity of scheduling more than one PDSCH. For example, a TDRA table applied by the first DCI is used to support scheduling of multiple PDSCHs via one DCI, which means that the first DCI is able to schedule or can schedule multiple PDSCHs.

In the embodiments of the present disclosure, the terminal equipment may further receive a second DCI, the second DCI indicating the above-mentioned first time-domain position.

In some embodiments, the first DCI does not indicate the first time-domain position.

In some embodiments, the first DCI and the second DCI are same or different DCI formats.

In some embodiments, the terminal equipment determines whether to transmit HARQ-ACK information of a PDSCH scheduled by the first DCI at the first time-domain position indicated by the second DCI, according to at least one of the following:
a time-domain position relationship between the first DCI and the second DCI;
a time-domain position relationship between the second DCI and a PDSCH scheduled by the first DCI;
a time-domain position relationship between a PDSCH scheduled by the second DCI and a PDSCH scheduled by the first DCI;
a PDSCH group index associated with the first DCI and the second DCI;
a time-domain position relationship between a PDSCH and a SPS PDSCH scheduled by the first DCI;
a time-domain position relationship between a first time-domain position indicated by the first DCI and a time-domain position corresponding to a SPS PDSCH;
a time-domain position relationship between time-domain positions corresponding to the second DCI and a SPS PDSCH;
an information field for requesting or triggering HARQ-ACK information reporting based on Type-3 HARQ-ACK codebook, in the second DCI.

In some embodiments, a PDCCH monitoring occasion used to transmit/receive the second DCI is after a PDCCH monitoring occasion used to transmit/receive the first DCI (or, the second DCI is transmitted/received after the first DCI), or, a PDCCH monitoring occasion used to transmit the second DCI is not earlier than a PDCCH monitoring occasion used to transmit the first DCI (or, the second DCI is transmitted/received not earlier than the first DCI). Namely, in such situation, a terminal equipment transmits HARQ-ACK information corresponding to a PDSCH scheduled by the first DCI at a first time-domain position indicated by the second DCI, otherwise, the terminal equipment does not transmit the HARQ-ACK information corresponding to the PDSCH scheduled by the first DCI at the first time-domain position indicated by the second DCI. That is, a UE needs to determine whether to transmit the HARQ-ACK information corresponding to the PDSCH scheduled by the first DCI at the first time-domain position indicated by the second DCI according to a time-domain position relationship between the first DCI and the second DCI.

In some embodiments, a sequential order of PDCCH monitoring occasions is determined according to a start position/start time (such as a first symbol, or a start position of the first symbol) of the PDCCH monitoring occasions. For example, if a start position of a first PDCCH monitoring occasion is after a start position of a second PDCCH monitoring occasion, the first PDCCH monitoring occasion is after the second PDCCH monitoring occasion. Similarly, if a start position of a first PDCCH monitoring occasion is after a start position of a second PDCCH monitoring occasion or they have the same start position, the first PDCCH monitoring occasion is not earlier than the second PDCCH monitoring occasion.

In some embodiments, the second DCI is transmitted/received after the first DCI, including that the first DCI and the second DCI are transmitted/received at the same PDCCH monitoring occasion (same or different downlink carriers/cells), an index of a resource (such as CCE or REG) used to transmit/receive the second DCI is greater than an index of a resource (such as CCE or REG) used to transmit/receive the first DCI.

In some embodiments, a PDCCH monitoring occasion used to transmit/receive the second DCI is after a PDSCH (for example last one) scheduled by the first DCI (or, the second DCI is transmitted/received after a PDSCH (for example last one) scheduled by the first DCI), or, a PDCCH monitoring occasion used to transmit the second DCI is not earlier than a PDSCH scheduled by the first DCI (or, the second DCI is transmitted/received not earlier than a PDSCH (for example last one) scheduled by the first DCI). Namely, in such situation, a terminal equipment transmits HARQ-ACK information corresponding to a PDSCH scheduled by the first DCI at a first time-domain position indicated by the second DCI, otherwise, the terminal equipment does not transmit the HARQ-ACK information corresponding to the PDSCH scheduled by the first DCI at the first time-domain position indicated by the second DCI. That is, a UE needs to determine whether to transmit the HARQ-ACK information corresponding to the PDSCH scheduled by the first DCI at the first time-domain position indicated by the second DCI according to a time-domain position relationship between the second DCI and the PDSCH scheduled by the first DCI.

In some embodiments, a PDSCH (for example first) (if any) scheduled by the second DCI is after a PDSCH (for example last one) scheduled by the first DCI, or, a PDSCH (for example first) (if any) scheduled by the second DCI is not earlier than a PDSCH (for example last one) scheduled by the first DCI. Namely, in such situation, a terminal equipment transmits HARQ-ACK information corresponding to a PDSCH scheduled by the first DCI at a first time-domain position indicated by the second DCI, otherwise, the terminal equipment does not transmit the HARQ-ACK information corresponding to the PDSCH scheduled by the first DCI at the first time-domain position indicated by the second DCI. That is, a UE needs to determine whether to transmit the HARQ-ACK information corresponding to the PDSCH scheduled by the first DCI at the first time-domain position indicated by the second DCI according to a time-domain position relationship between a PDSCH scheduled by the second DCI and the PDSCH scheduled by the first DCI.

In some embodiments, the first DCI indicates a first PDSCH group index, the second DCI indicates HARQ-ACK information reporting for the first PDSCH group index. Namely, in a case where said two DCIs associate the same PDSCH group, a terminal equipment transmits HARQ-ACK information corresponding to a PDSCH scheduled by the first DCI at a first time-domain position indicated by the second DCI, otherwise, the terminal equipment does not transmit the HARQ-ACK information corresponding to the PDSCH scheduled by the first DCI at the first time-domain position indicated by the second DCI. That is, a UE needs to determine whether to transmit the HARQ-ACK information corresponding to the PDSCH scheduled by the first DCI at the first time-domain position indicated by the second DCI according to PDSCH group indexes associated with the first DCI and the second DCI.

In some embodiments, the second DCI indicates HARQ-ACK information reporting based on Type-3 HARQ-ACK codebook. For example, the second DCI may further include an information field for requesting or triggering HARQ-ACK information reporting based on Type-3 HARQ-ACK codebook, a value of the information field is 1 (that is, the second DCI indicates HARQ-ACK information reporting based on Type-3 HARQ-ACK codebook). Namely, in a case where the second DCI includes the above information field and a value of the information field is 1, a terminal equipment transmits HARQ-ACK information corresponding to a PDSCH scheduled by the first DCI at a first time-domain position indicated by the second DCI, otherwise, the terminal equipment does not transmit the HARQ-ACK information corresponding to the PDSCH scheduled by the first DCI at the first time-domain position indicated by the second DCI. That is, a UE needs to determine whether to transmit the HARQ-ACK information corresponding to the PDSCH scheduled by the first DCI at the first time-domain position indicated by the second DCI according to the above information field of the second DCI.

In some embodiments, the second DCI may schedule a PDSCH, or may not schedule a PDSCH. A situation in which the second DCI does not schedule a PDSCH, for example, includes: the second DCI is only used to activate or deactivate an SPS, and/or, the second DCI is only used to indicate a SCell dormant, and/or, the second DCI is only used to request Type-3 HARQ-ACK codebook, and/or, the second DCI adopts DCI format 2_x (a value of x is 0, 1, 2, 3, 4, 5, 6, etc.), but is not limited to these.

In some embodiments, the second DCI is used to schedule more than one PDSCH, that is, the second DCI is able to schedule or can schedule more than one PDSCH, or the second DCI has a capacity of scheduling more than one PDSCH. For example, a TDRA table applied by the second DCI is used to support scheduling of multiple PDSCHs via one DCI, which means that the second DCI is able to schedule or can schedule multiple PDSCHs.

In some embodiments, the second DCI is not used to schedule more than one PDSCH, that is, the second DCI does not have a capacity of scheduling more than one PDSCH. For example, a TDRA table applied by the second DCI is not used to support scheduling of multiple PDSCHs via one DCI, which means that the second DCI is not able to schedule or cannot schedule multiple PDSCHs.

The above embodiments only illustrate several situations in which a terminal equipment transmits HARQ-ACK information corresponding to a PDSCH scheduled by the first DCI at the above-mentioned first time-domain position, but the present disclosure is not limited to this, appropriate modifications can be also made based on the above embodiments. For example, the above and below embodiments may be used individually, or one or more of the above and below embodiments may be combined.

In the embodiments of the present disclosure, an SPS is configured and/or activated for a terminal equipment, the first DCI schedules one or more than one PDSCH, and the terminal equipment receives a semi-persistent scheduled PDSCH (SPS PDSCH) after a last PDSCH scheduled by the first DCI; or, the first DCI indicates one or more than one PDSCH, and the terminal equipment receives an SPS PDSCH after the last PDSCH indicated by the first DCI. In such situation, the terminal equipment transmits HARQ-ACK information corresponding to a PDSCH scheduled by the first DCI at a first time-domain position indicated by the second DCI, otherwise, the terminal equipment does not transmit the HARQ-ACK information corresponding to the PDSCH scheduled by the first DCI at the first time-domain position indicated by the second DCI. That is, a UE needs to determine whether to transmit the HARQ-ACK information corresponding to the PDSCH scheduled by the first DCI at the first time-domain position indicated by the second DCI according to a time-domain position relationship between the PDSCH and the SPS PDSCH scheduled by the first DCI. The meaning of scheduling a PDSCH by the DCI and the meaning of indicating a PDSCH by the DCI have been described in the preceding text, and will not be repeated here.

In some embodiments, receiving a semi-persistent scheduled PDSCH (SPS PDSCH) after a PDSCH means that a start position/time (such as a first symbol, or a start position of the first symbol) of the SPS PDSCH is after a start position/time (such as a first symbol, or a start position of the first symbol) of the PDSCH, or, a slot where the SPS PDSCH is located is after a slot where the PDSCH is located, or, a start position/time (such as a first symbol, or a start position of the first symbol) of the SPS PDSCH is after an end position/time (such as a last symbol, or a start position/time of the last symbol) of the PDSCH.

In some embodiments, a first time-domain position indicated by the second DCI is not later than a time-domain position used to transmit HARQ-ACK information corresponding to the SPS PDSCH, i.e., a time-domain position corresponding to the SPS PDSCH. Namely, the first time-domain position indicated by the second DCI is earlier than a time-domain position used to transmit HARQ-ACK information corresponding to the SPS PDSCH, or, is the same as a time-domain position used to transmit HARQ-ACK information corresponding to the SPS PDSCH. In such situation, the terminal equipment transmits HARQ-ACK information corresponding to a PDSCH scheduled by the first DCI at a first time-domain position indicated by the second DCI, otherwise, the terminal equipment does not transmit the HARQ-ACK information corresponding to the PDSCH scheduled by the first DCI at the first time-domain position indicated by the second DCI. That is, a UE needs to determine whether to transmit the HARQ-ACK information corresponding to the PDSCH scheduled by the first DCI at the first time-domain position indicated by the second DCI according to a time-domain position relationship between the first time-domain position indicated by the first DCI and a time-domain position corresponding to the SPS PDSCH.

In some embodiments, an SPS is configured and/or activated for a terminal equipment, and receives the above-mentioned second DCI after the time-domain position corresponding to the SPS PDSCH. Namely, the time-domain position corresponding to the SPS PDSCH is before the second DCI. In such situation, the terminal equipment transmits HARQ-ACK information corresponding to a PDSCH scheduled by the first DCI at a first time-domain position indicated by the second DCI, otherwise, the terminal equipment does not transmit the HARQ-ACK information corresponding to the PDSCH scheduled by the first DCI at the first time-domain position indicated by the second DCI. That is, a UE needs to determine whether to transmit the HARQ-ACK information corresponding to the PDSCH scheduled by the first DCI at the first time-domain position indicated by the second DCI according to a time-domain position relationship between the second DCI and the time-domain position corresponding to the SPS PDSCH.

In some embodiments, an SCS used to transmit the first DCI, an SCS used to transmit the second DCI, and an SCS used to transmit the SPS PDSCH are the same or different.

In some embodiments, the first DCI, a PDSCH scheduled by the first DCI, the second DCI, a PDSCH scheduled by the second DCI (if scheduled), and an SPS PDSCH (if received) is transmitted/received in same or different downlink carriers or cells. In the case of transmission/reception in different downlink carriers or cells, the different downlink carriers or cells, for example, correspond to same or different uplink carriers or cells used to transmit HARQ-ACK information, or, the different downlink carriers or cells belong to a same or different cell group. The cell group for example is a PUCCH group (such as a first PUCCH group or a secondary PUCCH group), or an MCG, or an SCG. For example, assuming that it is the same cell group, when a UE is configured with an SCG, the cell group for example is an MCG or an SCG, correspondingly, said uplink carrier or cell for example is Pcell and PScell, respectively. For example, when a UE is configured with PUCCH-Scell, the cell group for example is a first PUCCH group or a secondary PUCCH group, correspondingly, said uplink carrier or cell for example is Pcell and said PUCCH-Scell, respectively.

The above embodiments only illustrate how does a terminal equipment receive a SPS PDSCH in a case where the first DCI schedules or indicates one or more than one PDSCH, but the present disclosure is not limited to this, appropriate modifications can be also made based on the above embodiments. For example, the above embodiments may be used individually, or one or more of the above embodiments may be combined.

In the embodiments of the present disclosure, the first DCI does not indicate a first time-domain position. For example, the first DCI includes a first information field used to indicate a first time-domain position, the first information field indicating a first specific value.

In some embodiments, the first specific value does not have a corresponding first time-domain position, thus the first DCI does not indicate the first time-domain position. In some embodiments, the first specific value is -1. The meaning of the first specific value has been described in the preceding text and will not be repeated here.

In some embodiments, the first DCI only indicates or schedules one PDSCH. Namely, if the first DCI does not indicate a first time-domain position (i.e., indicates a first specific value), the first DCI only indicates or schedules one PDSCH, thereby said technical problem is solved.

In the above embodiment, if the first DCI indicates or schedules more than one PDSCH, the first DCI will not indicate said first specific value, even if a value range corresponding to a first information field of the first DCI as configured by RRC signaling (such as first indication information) contains the first specific value. The RRC signaling here may be one of said RRC signaling, such as *dl-DataToUL-ACK-r16*, or may be new signaling, such as *dl-DataToUL-ACK-r17*, and is not limited to these.

In some embodiments, the first DCI indicates or schedules more than one PDSCH, and an SPS is not configured and/or activated for a terminal equipment. Namely, only when an SPS is not configured and/or activated for the terminal equipment, the first DCI may indicate the first specific value when indicating or scheduling more than one PDSCH. In other words, if an SPS is configured and/or activated for the terminal equipment, the first DCI cannot indicate the first specific value when indicating or scheduling more than one PDSCH, or schedules more than one PDSCH when indicating the first specific value.

In the embodiments of the present disclosure, the terminal equipment may further receive first indication information, the first indication information being used to configure a value range corresponding to a first information field of the first DCI, the value range including said first specific value.

In the embodiments of the present disclosure, the terminal equipment may further report its own capacity information. For example, the terminal equipment may transmit second indication information, the second indication information being used to indicate at least one of the following:
whether the terminal equipment supports to feed back HARQ-ACK information to which the PDSCHs scheduled by the first DCI correspond in a case where the first DCI does not indicate the first time-domain position;
whether the terminal equipment supports to feed back HARQ-ACK information to which the PDSCHs scheduled by the first DCI correspond in a case where the first DCI indicates more than one PDSCH and does not indicate the first time-domain position;
whether the terminal equipment supports to feed back HARQ-ACK information to which the PDSCHs scheduled by the first DCI correspond in a case where the first DCI schedules more than one PDSCH and does not indicate the first time-domain position;
when an SPS is configured and/or activated, whether the terminal equipment supports to feed back HARQ-ACK information to which the PDSCHs scheduled by the first DCI correspond in a case where the first DCI does not indicate the first time-domain position;
when an SPS is configured and/or activated, whether the terminal equipment supports to feed back HARQ-ACK information to which the PDSCHs scheduled by the first DCI correspond in a case where the first DCI indicates more than one PDSCH and does not indicate the first time-domain position; and
when an SPS is configured and/or activated, whether the terminal equipment supports to feed back HARQ-ACK information to which the PDSCHs scheduled by the first DCI correspond in a case where the first DCI schedules more than one PDSCH and does not indicate the first time-domain position.

The above embodiments only illustrate contents indicated by the second indication information, but the present disclosure is not limited to this, appropriate modifications can be also made based on the above embodiments. For example, the above embodiments may be used individually, or one or more of the above embodiments may be combined.

The method in the embodiments of the present disclosure is described below in conjunction with the drawings. In the following description, scheduling more than one PDSCH by the first DCI is taken as an example.

In the embodiments of the present disclosure, a UE receives a first DCI format detected by the UE in a first PDCCH monitoring occasion, and the first DCI format includes a first information field, such as *PDSCH-to-HARQ,feedback timing indicator field*, this field provides a first specific value from first indication information.

If the UE further detects a second DCI format (which may or may not schedule a PDSCH), the UE multiplexes corresponding HARQ-ACK information (HARQ-ACK information corresponding to the PDSCH scheduled by the first DCI format) to a PUCCH transmission or a PUCCH transmission in a slot (a first time-domain position) indicated by a value of *PDSCH-to-HARQ_feedback timing indicator field* of the second DCI format.

In some embodiments, a UE is not provided with information for configuring Type-2 HARQ-ACK codebook based on a PDSCH group (such as, first information for short) (such as *pdsch-HARQ-ACK-Codebook-r16*), but is not limited to this. The UE detects the second DCI format in a (any) PDCCH monitoring occasion after the first DCI format, and a slot (a first time-domain position) indicated by the value of *PDSCH-to-HARQ_feedback timing indicator field* in the second DCI format is not later than a slot (or subslot or symbol) of HARQ-ACK information used for responding to SPS PDSCH reception (if any) received after the last (valid) PDSCH scheduled by the first DCI format (or a first time-domain position corresponding to the SPS PDSCH).

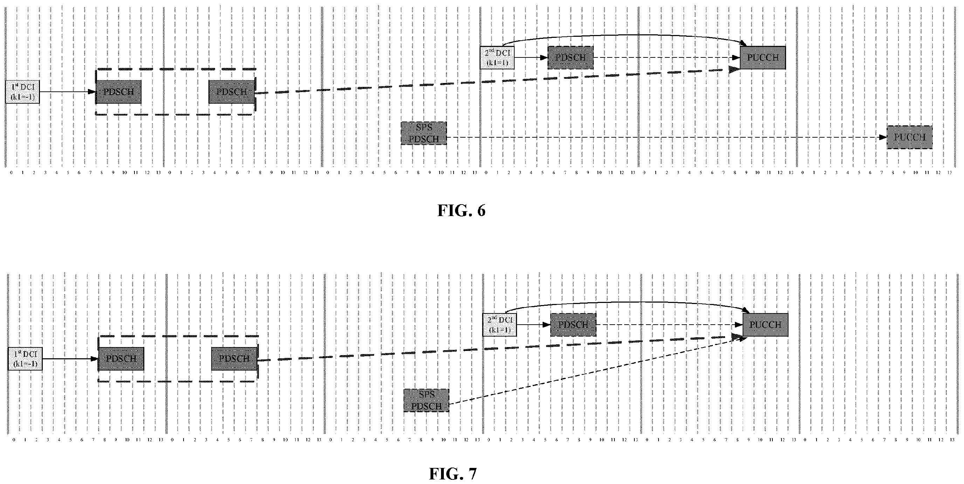

DCI formats shown in FIGs. 6 to 9 are taken as an example. If a UE detects the first DCI format and the second DCI format, the UE is not provided with first information (such as *pdsch-HARQ-ACK-Codebook-r16*), and a slot (a first time-domain position) indicated by a value of *PDSCH-to-HARQ_feedback timing indicator field* of the second DCI format is not later than a slot of HARQ-ACK information corresponding to SPS PDSCH reception received after the last PDSCH scheduled by the first DCI format, the UE multiplexes the HARQ-ACK information corresponding to the PDSCH scheduled by the first DCI format to a PUCCH transmission or a PUSCH transmission in a slot indicated by the value of *PDSCH_to_HARQ_feedback timing indicator field* of the second DCI format.

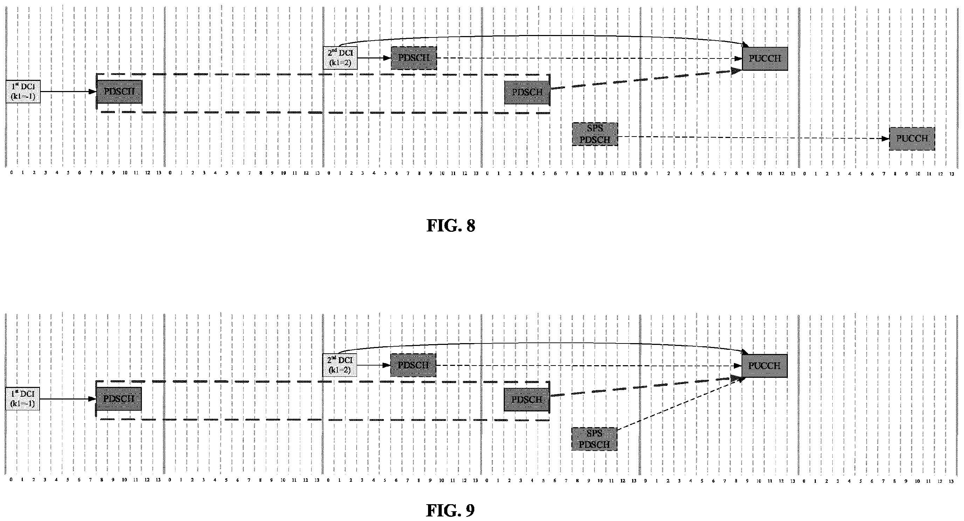

In the examples of FIGs. 6 and 7, PDSCHs scheduled by different DCIs do not intersect, and SPS PDSCH reception is before the second DCI. In the examples of FIGs. 8 and 9, PDSCHs scheduled by different DCIs intersect, and SPS PDSCH reception is after the second DCI. In the examples of FIGs. 6 and 8, the first time-domain position used to transmit HARQ-ACK information corresponding to a PDSCH scheduled by the first DCI is earlier than a time-domain position used to transmit HARQ-ACK information corresponding to a SPS PDSCH. In the examples of FIGs. 7 and 9, the first time-domain position used to transmit HARQ-ACK information corresponding to a PDSCH scheduled by the first DCI is the same as a time-domain position used to transmit HARQ-ACK information corresponding to a SPS PDSCH.

In some other embodiments, the UE is provided with first information (such as *pdsch-HARQ-ACK-Codebook-r16*), the UE detects the second DCI format in any PDCCH monitoring occasion after the first PDCCH monitoring occasion, and the second DCI format indicates HARQ-ACK information reporting for same PDSCH group indexes as indicated by the first DCI format, and a slot (a first time-domain position) indicated by the value of *PDSCH-to-HARQ*_*feedback timing indicator field* in the second DCI format is not later than a slot of HARQ-ACK information used for responding to SPS PDSCH reception (if any) received after the last (valid) PDSCH scheduled by the first DCI format.

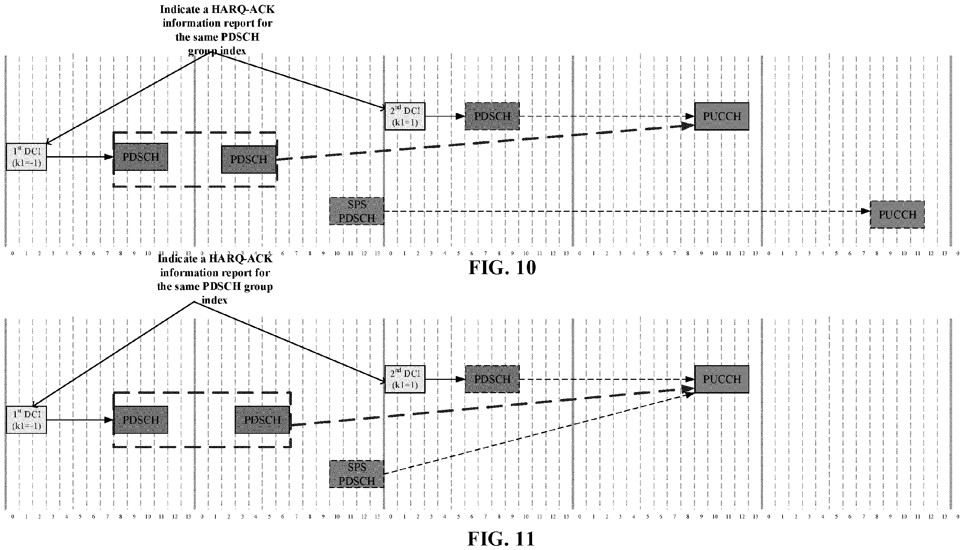

DCI formats shown in FIGs. 10 and 11 are taken as an example. If a UE detects the first DCI format and the second DCI format, the UE is provided with first information (such as *pdsch-HARQ-ACK-Codebook-r16*), the first DCI format and the second DCI format associate the same PDCCH group index, and a slot (a first time-domain position) indicated by a value of *PDSCH-to-HARQ_feedback timing indicator field* of the second DCI format is not later than a slot of HARQ-ACK information corresponding to SPS PDSCH reception received after the last PDSCH scheduled by the first DCI format, the UE multiplexes the HARQ-ACK information corresponding to the PDSCH scheduled by the first DCI format to a PUCCH transmission or a PUSCH transmission in a slot indicated by the value of *PDSCH-to-HARQ_feedback timing indicator field* of the second DCI format.

In the examples of FIGs. 10 and 11, PDSCHs scheduled by different DCIs do not intersect, and SPS PDSCH reception is before the second DCI. However, the present disclosure is not limited to this. Similar to the examples of FIGs. 8 and 9, PDSCHs scheduled by different DCIs may also intersect, and SPS PDSCH reception may also be after the second DCI. In the example of FIG. 10, the first time-domain position used to transmit HARQ-ACK information corresponding to a PDSCH scheduled by the first DCI is earlier than a time-domain position used to transmit HARQ-ACK information corresponding to a SPS PDSCH. In the example of FIG. 11, the first time-domain position used to transmit HARQ-ACK information corresponding to a PDSCH scheduled by the first DCI is the same as a time-domain position used to transmit HARQ-ACK information corresponding to a SPS PDSCH.

In some other embodiments, a UE is provided with first information (such as *pdsch-HARQ-ACK-Codebook-r16*), the UE receives the second DCI format at a slot later than a slot of HARQ-ACK information used for responding to SPS PDSCH reception received after the last (valid) PDSCH scheduled by the first DCI format, the second DCI format indicates HARQ-ACK information reporting with the same PDSCH group index as that indicated by the first DCI format.

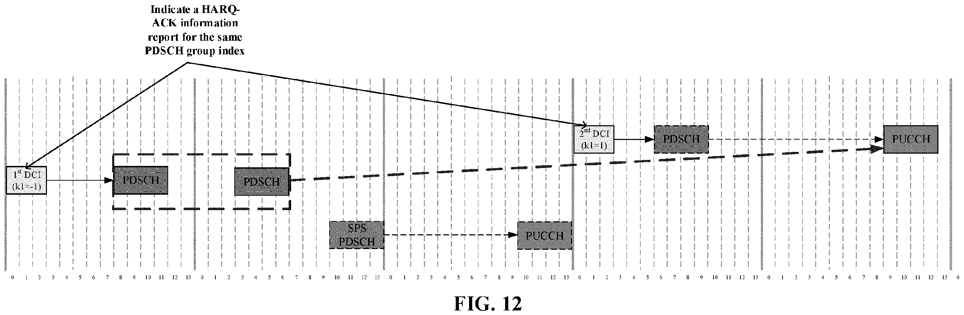

DCI formats shown in FIG. 12 are taken as an example. If a UE detects the first DCI format and the second DCI format, the UE is provided with first information (such as *pdsch-HARQ-ACK-Codebook-r16*), the first DCI format and the second DCI format associate/correspond to the same PDCCH group index, and the second DCI format is later than a slot of HARQ-ACK information corresponding to SPS PDSCH reception received after the last PDSCH scheduled by the first DCI format, the UE multiplexes the HARQ-ACK information corresponding to the PDSCH scheduled by the first DCI format to a PUCCH transmission or a PUSCH transmission in a slot indicated by the value of *PDSCH-to-HARQ_feedback timing indicator field* of the second DCI format.

In the example of FIG. 12, PDSCHs scheduled by different DCIs do not intersect. However, the present disclosure is not limited to this. Similar to the examples of FIGs. 8 and 9, PDSCHs scheduled by different DCIs may also intersect.

In some other embodiments, the UE is provided with *pdsch HARQ ACK OneShotFeedback,* the first DCI format does not indicate SPS PDSCH release or SCell dormant, the UE detects the second DCI format in any PDCCH monitoring occasion after the first DCI format, and the second DCI format includes *One-shot HARQ-ACK request field* with a value of 1, the UE includes HARQ-ACK information of a PDSCH scheduled by the first DCI in Type-3 HARQ-ACK codebook, wherein a slot (a first time-domain position) indicated by the value of *PDSCH_to_HARQ_feedback timing indicator field* of the second DCI format is not later than a slot of HARQ-ACK information used for responding to SPS PDSCH reception (if any) received after the last (valid) PDSCH scheduled by the first DCI format.

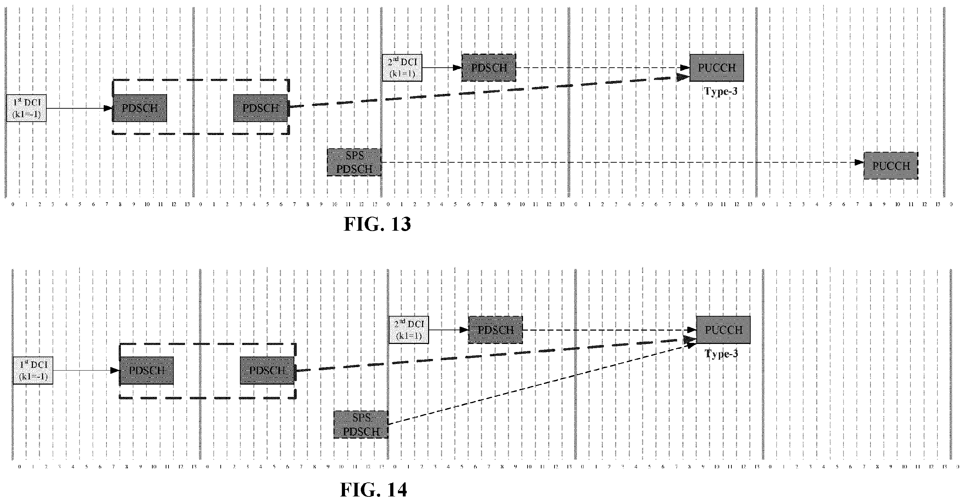

DCI formats shown in FIGs. 13 and 14 are taken as an example. If a UE detects the first DCI format and the second DCI format, the UE is provided with*pdsch HARQ ACK OneShotFeedback,* a value of *One-shot HARQ-ACK request field* of the second DCI format is 1, and a slot (a first time-domain position) indicated by a value of *PDSCH-to-HARQ_feedback timing indicator field* of the second DCI format is not later than a slot of HARQ-ACK information corresponding to SPS PDSCH reception received after the last PDSCH scheduled by the first DCI format, the UE multiplexes the HARQ-ACK information corresponding to the PDSCH scheduled by the first DCI format to a PUCCH transmission or a PUSCH transmission in a slot (a first time-domain position) indicated by the value of *PDSCH-to-HARQ_feedback timing indicator field* of the second DCI format.

In the examples of FIGs. 13 and 14, PDSCHs scheduled by different DCIs do not intersect, and SPS PDSCH reception is before the second DCI. However, the present disclosure is not limited to this. Similar to the examples of FIGs. 8 and 9, PDSCHs scheduled by different DCIs may also intersect, and SPS PDSCH reception may also be after the second DCI. In the example of FIG. 13, the first time-domain position used to transmit HARQ-ACK information corresponding to a PDSCH scheduled by the first DCI is earlier than a time-domain position used to transmit HARQ-ACK information corresponding to a SPS PDSCH. In the example of FIG. 14, the first time-domain position used to transmit HARQ-ACK information corresponding to a PDSCH scheduled by the first DCI is the same as a time-domain position used to transmit HARQ-ACK information corresponding to a SPS PDSCH.

In some other embodiments, the UE is provided with *pdsch-HARQ-ACK-OneShotFeedback-r16*, the first DCI format does not indicate SPS PDSCH release or SCell dormant, and the UE receives the second DCI format after a slot of HARQ-ACK information used for responding to SPS PDSCH reception received after the last (valid) PDSCH scheduled by the first DCI format, and the second DCI format includes *One-shot HARQ-ACK request field* with a value of 1, the UE includes the HARQ-ACK information of the PDSCH scheduled by the first DCI in Type-3 HARQ-ACK codebook.

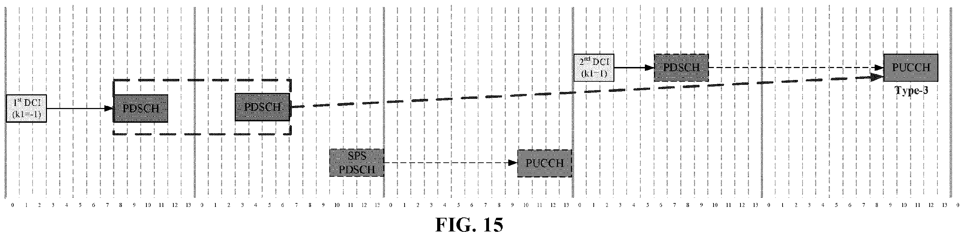

DCI formats shown in FIG. 15 are taken as an example. If a UE detects the first DCI format and the second DCI format, the UE is provided with *pdsch-HARQ-ACK-OneShotFeedback-r16*, and the second DCI format is later than a slot of HARQ-ACK information corresponding to SPS PDSCH reception received after the last PDSCH scheduled by the first DCI format, and the second DCI format includes *One-shot HARQ-ACK request field* with a value of 1, the UE multiplexes the HARQ-ACK information corresponding to the PDSCH scheduled by the first DCI format to a PUCCH transmission or a PUSCH transmission in a slot (a first time-domain position) indicated by the value of *PDSCH_to_HARQ_feedback timing indicator field* of the second DCI format.

In the example of FIG. 15, PDSCHs scheduled by different DCIs do not intersect. However, the present disclosure is not limited to this. Similar to the examples of FIGs. 8 and 9, PDSCHs scheduled by different DCIs may also intersect.

The above embodiments are only illustrative for the embodiments of the present disclosure, but the present disclosure is not limited to this, appropriate modifications can be also made based on the above embodiments. For example, the above embodiments may be used individually, or one or more of the above embodiments may be combined.

As can be known from the above embodiments, in a case where the first DCI is able to schedule or can schedule more than one PDSCH, after receiving the first DCI and the PDSCH scheduled by the first DCI, the terminal equipment transmits HARQ-ACK information corresponding to the PDSCH scheduled by the first DCI at a first time-domain position, thereby feedback of corresponding HARQ-ACK information is supported while supporting scheduling of multiple PDSCHs via one DCI.

### Embodiments of a second aspect

The embodiments of the present disclosure provide a method for receiving signals, which will be described from a network device. The method relates to processing on a network device side corresponding to the method in the embodiments of the first aspect, wherein the same contents as the embodiments of the first aspect are not repeated.

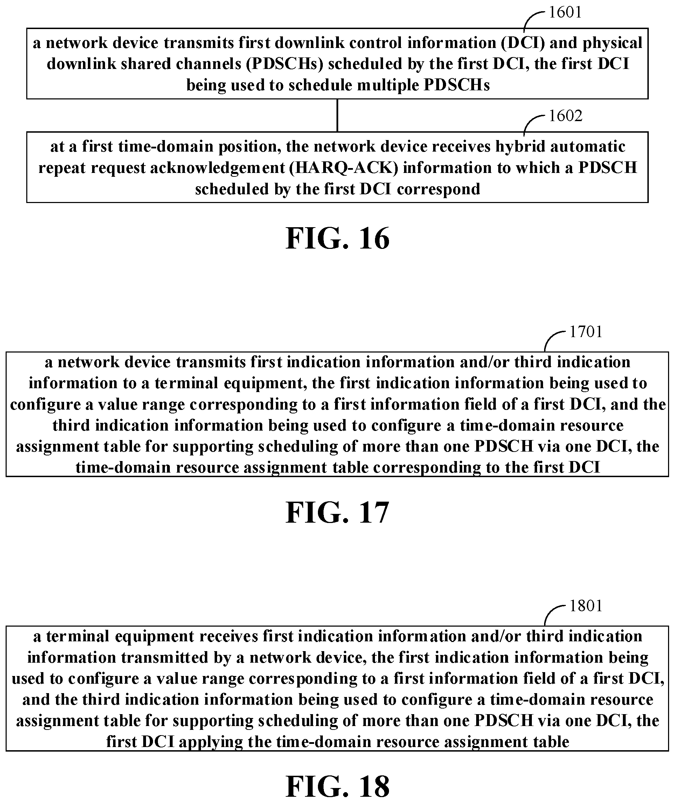

FIG. 16 is a schematic diagram of a method for receiving signals in the embodiments of the present disclosure. As shown in FIG. 16, the method comprises:
1601: a network device transmits first downlink control information (DCI) and physical downlink shared channels (PDSCHs) scheduled by the first DCI, the first DCI being used to schedule multiple PDSCHs; and
1602: at a first time-domain position, the network device receives hybrid automatic repeat request acknowledgement (HARQ-ACK) information to which a PDSCH scheduled by the first DCI corresponds.

In some embodiments, the network device further transmits second DCI, the second DCI indicating the first time-domain position.

In the above embodiment, in some implementations, a physical downlink control channel (PDCCH) monitoring occasion used to transmit the second DCI is after a PDCCH monitoring occasion used to transmit the first DCI; or, the PDCCH monitoring occasion used to transmit the second DCI is not earlier than a PDCCH monitoring occasion used to transmit the first DCI.

In the above embodiment, the second DCI schedules a PDSCH, or does not schedule a PDSCH. The second DCI does not schedule a PDSCH, for example including: the second DCI is used to activate or deactivate an SPS, and/or, the second DCI is used to indicate SCell dormant, and/or, the second DCI adopts DCI format 2_x.

In the above embodiment, in some implementations, the first DCI indicates a first PDSCH group index, and the second DCI indicates HARQ-ACK information reporting for the first PDSCH group index.

In the above embodiment, in some implementations, the second DCI indicates HARQ-ACK information reporting based on Type-3 HARQ-ACK codebook.

In the above embodiment, in some implementations, the second DCI includes an information field used to request or trigger HARQ-ACK information reporting based on Type-3 HARQ-ACK codebook, a value of the information field being 1.

In the above embodiment, in some implementations, the second DCI is used to schedule (is able to schedule or can schedule) more than one PDSCH; or the second DCI is not used to schedule more than one PDSCH, that is, the second DCI does not have an ability of scheduling more than one PDSCH.

In some embodiments, the first DCI schedules one or more than one PDSCH, and the network device transmits a semi-persistent scheduled PDSCH (SPS PDSCH) after a last PDSCH scheduled by the first DCI; or, the first DCI indicates one or more than one PDSCH, and the network device transmits an SPS PDSCH after the last PDSCH indicated by the first DCI.

In the above embodiment, in some implementations, the first time-domain position is not later than a time-domain position to which the SPS PDSCH corresponds, the time-domain position to which the SPS PDSCH corresponds being used to transmit HARQ-ACK information of the SPS PDSCH.

In the above embodiment, in some implementations, the network device transmits second DCI after a time-domain position to which the SPS PDSCH corresponds, the second DCI indicating the first time-domain position.

In some embodiments, the first DCI does not indicate a first time-domain position. For example, the first DCI includes a first information field used to indicate a first time-domain position, the first information field indicating a first specific value, wherein the first specific value does not have a corresponding first time-domain position, thereby showing that the first DCI does not indicate the first time-domain position. In the above embodiment, the first specific value may be -1.

In the above embodiment, in some implementations, the first DCI only indicates or schedules one PDSCH.

In the above embodiment, in some implementations, the first DCI indicates or schedules more than one PDSCH, and an SPS is not configured and/or activated for the terminal equipment.

In some embodiments, the network device may further transmit first indication information, the first indication information being used to configure a value range corresponding to a first information field of the first DCI, the value range including a first specific value.

In some embodiments, the network device may further receive second indication information, the second indication information being used to indicate at least one of the following:
whether the terminal equipment supports to feed back HARQ-ACK information to which the PDSCHs scheduled by the first DCI correspond in a case where the first DCI does not indicate the first time-domain position;
whether the terminal equipment supports to feed back HARQ-ACK information to which the PDSCHs scheduled by the first DCI correspond in a case where the first DCI indicates more than one PDSCH and does not indicate the first time-domain position;
whether the terminal equipment supports to feed back HARQ-ACK information to which the PDSCHs scheduled by the first DCI correspond in a case where the first DCI schedules more than one PDSCH and does not indicate the first time-domain position;
when an SPS is configured and/or activated, whether the terminal equipment supports to feed back HARQ-ACK information to which the PDSCHs scheduled by the first DCI correspond in a case where the first DCI does not indicate the first time-domain position;
when an SPS is configured and/or activated, whether the terminal equipment supports to feed back HARQ-ACK information to which the PDSCHs scheduled by the first DCI correspond in a case where the first DCI indicates more than one PDSCH and does not indicate the first time-domain position; and
when an SPS is configured and/or activated, whether the terminal equipment supports to feed back HARQ-ACK information to which the PDSCHs scheduled by the first DCI correspond in a case where the first DCI schedules more than one PDSCH and does not indicate the first time-domain position.

The above embodiments are only illustrative for the embodiments of the present disclosure, but the present disclosure is not limited to this, appropriate modifications can be also made based on the above embodiments. For example, the above embodiments may be used individually, or one or more of the above embodiments may be combined.

As can be known from the above embodiments, in a case where the first DCI is able to schedule or can schedule more than one PDSCH, after receiving the first DCI and the PDSCH scheduled by the first DCI, the terminal equipment transmits HARQ-ACK information corresponding to the PDSCH scheduled by the first DCI at a first time-domain position, thereby feedback of corresponding HARQ-ACK information is supported while supporting scheduling of multiple PDSCHs via one DCI.

### Embodiments of a third aspect

The embodiments of the present disclosure provide a method for transmitting signals, which will be described from a network device.

FIG. 17 is a schematic diagram of a method for transmitting signals in the embodiments of the present disclosure, as shown in FIG. 17, the method comprises:
1701, a network device transmits first indication information and/or third indication information to a terminal equipment, the first indication information being used to configure a value range corresponding to a first information field of a first DCI, and the third indication information being used to configure a time-domain resource assignment table for supporting scheduling of more than one PDSCH via one DCI, the time-domain resource assignment table corresponding to the first DCI.

In the embodiments of the present disclosure, the contents about the value range corresponding to the first information field of the first DCI have been described in the preceding text, are incorporated here, and are not repeated here.

According to the method in the embodiments of the present disclosure, a network device configures for a terminal equipment a value range corresponding to a first information field of the first DCI, and/or, the network device configures for the terminal equipment a time-domain resource assignment table used to support scheduling of more than one PDSCH via one DCI, the terminal equipment is able to support scheduling of multiple PDSCHs via one DCI, and is able to support feedback of corresponding HARQ-ACK information.

In some embodiments, the first DCI is DCI format 1_1 or DCI format 1_2. Namely, for DCI format 1_1 or DCI format 1_2, the network device configures for the terminal equipment a value range corresponding to a first information field and/or said time-domain resource assignment table.

In some embodiments, the first information field is used to determine a first time-domain position, the first time-domain position being used by the terminal equipment to transmit HARQ-ACK information. Relevant contents of the first time-domain position have been described in detail in the embodiments of the first aspect, are incorporated here, and are not repeated here.

In some embodiments, in a case where the network device transmits first indication information and third indication information, the value range corresponding to the first information field does not include a first specific value. Namely, if the network device configures for the terminal equipment the value range corresponding to said first information field and said time-domain resource assignment table, that is, the first DCI is able to schedule multiple PDSCHs, the network device does not configure the first specific value for the terminal equipment.

In some embodiments, in a case where the network device transmits the first indication information and the value range corresponding to said first information field includes the first specific value, the network device does not transmit the third indication information. Namely, in a case where the network device configures the first specific value for the terminal equipment, the network device does not configure said time-domain resource assignment table for the terminal equipment any more, and the first DCI cannot schedule multiple PDSCHs.

In some embodiments, in a case where the network device transmits first indication information and third indication information and the value range corresponding to said first information field includes the first specific value, the network device does not configure and/or activate an SPS for the terminal equipment. Namely, if the network device configures for the terminal equipment the value range corresponding to said first information field and said time-domain resource assignment table, and the network device configures the first specific value for the terminal equipment, the network device does not configure and/or activate an SPS for the terminal equipment any more.

In some embodiments, in a case where the network device configures and/or activates an SPS for the terminal equipment and transmits first indication information and third indication information, the value range corresponding to the first information field does not include a first specific value. Namely, if the network device configures and/or activates an SPS for the terminal equipment, and the network device configures for the terminal equipment the value range corresponding to said first information field and said time-domain resource assignment table, the value range corresponding to the first information field does not include a first specific value, i.e., the network device does not configure said first specific value for the terminal equipment.

In some embodiments, in a case where the network device configures and/or activates an SPS for the terminal equipment, and transmits the first indication information and the value range corresponding to said first information field includes the first specific value, the network device does not transmit the third indication information. Namely, if the network device configures and/or activates an SPS for the terminal equipment, and the network device configures for the terminal equipment the value range corresponding to said first information field, but the value range corresponding to the first information field includes a first specific value, the network device does not configure said time-domain resource assignment table for the terminal equipment, and the terminal equipment cannot schedule more than one PDSCH via one DCI.

As can be known from the above embodiments, the network device transmits the first indication information (configures the value range corresponding to the first information field), and the value range corresponding to the first information field includes a first specific value; the network device transmits third indication information (configures said time-domain resource assignment table); and the network device configures or activates an SPS for the terminal equipment, these three situations do not exist simultaneously.

In the above embodiment, the first specific value is -1. Contents about the first specific value have been described in detail in the embodiments of the first aspect, are incorporated here, and are not repeated here.

The above embodiments are only illustrative for the embodiments of the present disclosure, but the present disclosure is not limited to this, appropriate modifications can be also made based on the above embodiments. For example, the above embodiments may be used individually, or one or more of the above embodiments may be combined.

It should be noted that the embodiments of the present disclosure may be implemented separately or in combination with the embodiments of the second aspect, that is, the contents of the embodiments of the second aspect may be incorporated here, which is not limited in the present disclosure. Similarly, the contents of the embodiments of the second aspect may be implemented separately or in combination with the embodiments of the present disclosure, that is, the contents of the embodiments of the present disclosure may be incorporated into the embodiments of the second aspect, which is not limited in the present disclosure.

As can be known from the above embodiments, through the configuration of a network device, it is achieved that a terminal equipment supports feedback of corresponding HARQ-ACK information while supporting scheduling of multiple PDSCHs via one DCI.

### Embodiments of a fourth aspect

The embodiments of the present disclosure provide a method for receiving signals, which will be described from a terminal equipment. The method relates to processing on a terminal equipment side corresponding to the method in the embodiments of the third aspect, wherein the same contents as the embodiments of the third aspect are not repeated.

FIG. 18 is a schematic diagram of a method for receiving signals in the embodiments of the present disclosure. As shown in FIG. 18, the method comprises:
1801, a terminal equipment receives first indication information and/or third indication information transmitted by a network device, the first indication information being used to configure a value range corresponding to a first information field of a first DCI, and the third indication information being used to configure a time-domain resource assignment table for supporting scheduling of more than one PDSCH via one DCI, the first DCI applying the time-domain resource assignment table.

In the embodiments of the present disclosure, said first information field is used to determine a first time-domain position, the first time-domain position being used by the terminal equipment to transmit HARQ-ACK information. Relevant contents about the first time-domain position and the first value have been described in the preceding text, are incorporated here, and are not repeated here.

In some embodiments, in a case where the terminal equipment receives the first indication information and the third indication information, the terminal equipment does not expect that the value range corresponding to the first information field includes a first specific value.

In some embodiments, in a case where the terminal equipment receives the first indication information and the value range corresponding to said first information field includes the first specific value, the terminal equipment does not expect to receive third indication information.

In the above embodiments, in a case where the terminal equipment receives the first indication information and the third indication information and the value range corresponding to said first information field includes the first specific value, the terminal equipment does not expect to be configured with and/or activate an SPS.

In the above embodiments, in a case where an SPS is configured and/or activated for the terminal equipment and the terminal equipment receives the first indication information and the third indication information, the terminal equipment does not expect that the value range corresponding to the first information field includes a first specific value.

In the above embodiments, in a case where an SPS is configured and/or activated for the terminal equipment and the terminal equipment receives the first indication information and the value range corresponding to said first information field includes the first specific value, the terminal equipment does not expect to receive third indication information.

In the embodiments of the present disclosure, the following three situations do not exist simultaneously:
the terminal equipment receives said first indication information and the value range corresponding to the first information field includes the first specific value;
the terminal equipment receives said third indication information; and
an SPS is configured and/or activated for the terminal equipment.

In the embodiments of the present disclosure, the first specific value is -1. Contents about the first specific value have been described in the preceding text, are incorporated here, and are not repeated here.

The above embodiments are only illustrative for the embodiments of the present disclosure, but the present disclosure is not limited to this, appropriate modifications can be also made based on the above embodiments. For example, the above embodiments may be used individually, or one or more of the above embodiments may be combined.

It should be noted that the embodiments of the present disclosure may be implemented separately or in combination with the embodiments of the first aspect, that is, the contents of the embodiments of the first aspect may be incorporated here, the which is not limited in the present disclosure. Similarly, the contents of the embodiments of the second aspect may be implemented separately or in combination with the embodiments of the present disclosure, that is, the contents of the embodiments of the present disclosure may be incorporated into the embodiments of the first aspect, which is not limited in the present disclosure.

As can be known from the above embodiments, through the configuration of a network device, it is achieved that a terminal equipment supports feedback of corresponding HARQ-ACK information while supporting scheduling of multiple PDSCHs via one DCI.

### Embodiments of a fifth aspect

The embodiments of the present disclosure provide an apparatus for transmitting signals. The apparatus may, for example, be a terminal equipment, or may be one or more parts or components configured in the terminal equipment.

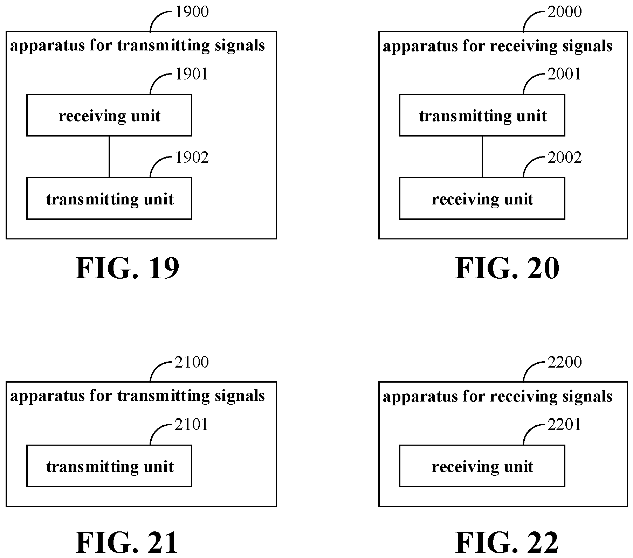

FIG. 19 is a schematic diagram of an example of an apparatus for transmitting signals in the embodiments of the present disclosure, corresponding to the method in the embodiments of the first aspect, the contents same as those in the embodiments of the first aspect are not repeated. As shown in FIG. 19, the apparatus 1900 for transmitting signals comprises:
a receiving unit 1901 configured to receive first downlink control information (DCI) and physical downlink shared channels (PDSCHs) scheduled by the first DCI, the first DCI being used to schedule multiple PDSCHs; and
a transmitting unit 1902 configured to, at a first time-domain position, transmit hybrid automatic repeat request acknowledgement (HARQ-ACK) information to which the PDSCHs scheduled by the first DCI correspond.

In some embodiments, the receiving unit 1901 further receives second DCI, the second DCI indicating the first time-domain position.

In some embodiments, a physical downlink control channel (PDCCH) monitoring occasion used to transmit the second DCI is after a PDCCH monitoring occasion used to transmit the first DCI; or, the PDCCH monitoring occasion used to transmit the second DCI is not earlier than a PDCCH monitoring occasion used to transmit the first DCI.

In some embodiments, the second DCI schedules a PDSCH, or does not schedule a PDSCH. The second DCI does not schedule a PDSCH, including: the second DCI is used to activate or deactivate an SPS, and/or, the second DCI is used to indicate SCell dormant, and/or, the second DCI adopts DCI format 2_x.

In some embodiments, the first DCI indicates a first PDSCH group index, and the second DCI indicates HARQ-ACK information reporting for the first PDSCH group index.

In some embodiments, the second DCI indicates HARQ-ACK information reporting based on Type-3 HARQ-ACK codebook.

In some embodiments, the second DCI includes an information field used to request or trigger HARQ-ACK information reporting based on Type-3 HARQ-ACK codebook, a value of the information field being 1.

In some embodiments, the second DCI is used to schedule more than one PDSCH; or the second DCI is not used to schedule more than one PDSCH.

In some embodiments, the first DCI schedules one or more than one PDSCH, and the terminal equipment receives a semi-persistent scheduled PDSCH (SPS PDSCH) after a last PDSCH scheduled by the first DCI; or, the first DCI indicates one or more than one PDSCH, and the terminal equipment receives an SPS PDSCH after the last PDSCH indicated by the first DCI.

In some embodiments, the first time-domain position is not later than a time-domain position to which the SPS PDSCH corresponds, the time-domain position to which the SPS PDSCH corresponds being used to transmit HARQ-ACK information of the SPS PDSCH.

In some embodiments, the terminal equipment receives second DCI after a time-domain position to which the SPS PDSCH corresponds, the second DCI indicating the first time-domain position.

In some embodiments, the first DCI does not indicate the first time-domain position. For example, the first DCI includes a first information field used to indicate a first time-domain position, the first information field indicating a first specific value, the first specific value does not have a corresponding first time-domain position.

In some embodiments, the first specific value is -1.

In some embodiments, the first DCI only indicates or schedules one PDSCH.

In some embodiments, the first DCI indicates or schedules more than one PDSCH, and an SPS is not configured and/or activated for the terminal equipment.

In some embodiments, the receiving unit 1901 further receives first indication information, the first indication information being used to configure a value range corresponding to a first information field of the first DCI, the value range including a first specific value.

In some embodiments, the transmitting unit 1902 further transmits second indication information, the second indication information being used to indicate at least one of the following:
whether the terminal equipment supports to feed back HARQ-ACK information to which the PDSCHs scheduled by the first DCI correspond in a case where the first DCI does not indicate the first time-domain position;
whether the terminal equipment supports to feed back HARQ-ACK information to which the PDSCHs scheduled by the first DCI correspond in a case where the first DCI indicates more than one PDSCH and does not indicate the first time-domain position;
whether the terminal equipment supports to feed back HARQ-ACK information to which the PDSCHs scheduled by the first DCI correspond in a case where the first DCI schedules more than one PDSCH and does not indicate the first time-domain position;
when an SPS is configured and/or activated, whether the terminal equipment supports to feed back HARQ-ACK information to which the PDSCHs scheduled by the first DCI correspond in a case where the first DCI does not indicate the first time-domain position;
when an SPS is configured and/or activated, whether the terminal equipment supports to feed back HARQ-ACK information to which the PDSCHs scheduled by the first DCI correspond in a case where the first DCI indicates more than one PDSCH and does not indicate the first time-domain position; and
when an SPS is configured and/or activated, whether the terminal equipment supports to feed back HARQ-ACK information to which the PDSCHs scheduled by the first DCI correspond in a case where the first DCI schedules more than one PDSCH and does not indicate the first time-domain position.

The embodiments of the present disclosure further provide an apparatus for receiving signals. The apparatus may, for example, be a network device, or may be one or more parts or components configured in the network device.

FIG. 20 is a schematic diagram of an example of an apparatus for receiving signals in the embodiments of the present disclosure, corresponding to the method in the embodiments of the second aspect, the contents same as those in the embodiments of the second aspect are not repeated. As shown in FIG. 20, the apparatus 2000 for receiving signals comprises:
a transmitting unit 2001 configured to transmit first downlink control information (DCI) and physical downlink shared channels (PDSCHs) scheduled by the first DCI, the first DCI being used to schedule multiple PDSCHs; and
a receiving unit 2002 configured to, at a first time-domain position, receive hybrid automatic repeat request acknowledgement (HARQ-ACK) information to which a PDSCH scheduled by the first DCI corresponds.

In some embodiments, the transmitting unit 2001 further transmits second DCI, the second DCI indicating the first time-domain position.

In some embodiments, a physical downlink control channel (PDCCH) monitoring occasion used to transmit the second DCI is after a PDCCH monitoring occasion used to transmit the first DCI; or, the PDCCH monitoring occasion used to transmit the second DCI is not earlier than a PDCCH monitoring occasion used to transmit the first DCI.

In some embodiments, the second DCI schedules a PDSCH, or does not schedule a PDSCH. The second DCI does not schedule a PDSCH, including: the second DCI is used to activate or deactivate an SPS, and/or, the second DCI is used to indicate SCell dormant, and/or, the second DCI adopts DCI format 2_x.

In some embodiments, the first DCI indicates a first PDSCH group index, and the second DCI indicates HARQ-ACK information reporting for the first PDSCH group index.

In some embodiments, the second DCI indicates HARQ-ACK information reporting based on Type-3 HARQ-ACK codebook.

In some embodiments, the second DCI includes an information field used to request or trigger HARQ-ACK information reporting based on Type-3 HARQ-ACK codebook, a value of the information field being 1.

In some embodiments, the second DCI is used to schedule more than one PDSCH; or the second DCI is not used to schedule more than one PDSCH.

In some embodiments, the first DCI schedules one or more than one PDSCH, and the network device transmits a semi-persistent scheduled PDSCH (SPS PDSCH) after a last PDSCH scheduled by the first DCI; or, the first DCI indicates one or more than one PDSCH, and the network device transmits an SPS PDSCH after the last PDSCH indicated by the first DCI.

In some embodiments, the first time-domain position is not later than a time-domain position to which the SPS PDSCH corresponds, the time-domain position to which the SPS PDSCH corresponds being used to transmit HARQ-ACK information of the SPS PDSCH.

In some embodiments, the network device transmits second DCI after a time-domain position to which the SPS PDSCH corresponds, the second DCI indicating the first time-domain position.

In some embodiments, the first DCI does not indicate the first time-domain position. For example, the first DCI includes a first information field used to indicate a first time-domain position, the first information field indicating a first specific value, the first specific value does not have a corresponding first time-domain position.

In some embodiments, the first specific value is -1.

In some embodiments, the first DCI only indicates or schedules one PDSCH.

In some embodiments, the first DCI indicates or schedules more than one PDSCH, and an SPS is not configured and/or activated for the terminal equipment.

In some embodiments, the transmitting unit 2001 further transmits first indication information, the first indication information being used to configure a value range corresponding to a first information field of the first DCI, the value range including a first specific value.

In some embodiments, the receiving unit 2002 further receives second indication information, the second indication information being used to indicate at least one of the following:
whether the terminal equipment supports to feed back HARQ-ACK information to which the PDSCHs scheduled by the first DCI correspond in a case where the first DCI does not indicate the first time-domain position;
whether the terminal equipment supports to feed back HARQ-ACK information to which the PDSCHs scheduled by the first DCI correspond in a case where the first DCI indicates more than one PDSCH and does not indicate the first time-domain position;
whether the terminal equipment supports to feed back HARQ-ACK information to which the PDSCHs scheduled by the first DCI correspond in a case where the first DCI schedules more than one PDSCH and does not indicate the first time-domain position;
when an SPS is configured and/or activated, whether the terminal equipment supports to feed back HARQ-ACK information to which the PDSCHs scheduled by the first DCI correspond in a case where the first DCI does not indicate the first time-domain position;
when an SPS is configured and/or activated, whether the terminal equipment supports to feed back HARQ-ACK information to which the PDSCHs scheduled by the first DCI correspond in a case where the first DCI indicates more than one PDSCH and does not indicate the first time-domain position; and
when an SPS is configured and/or activated, whether the terminal equipment supports to feed back HARQ-ACK information to which the PDSCHs scheduled by the first DCI correspond in a case where the first DCI schedules more than one PDSCH and does not indicate the first time-domain position.

The embodiments of the present disclosure further provide an apparatus for transmitting signals. The apparatus may, for example, be a network device, or may be one or more parts or components configured in the network device.

FIG. 21 is a schematic diagram of an example of an apparatus for transmitting signals in the embodiments of the present disclosure, corresponding to the method in the embodiments of the third aspect, the contents same as those in the embodiments of the third aspect are not repeated. As shown in FIG. 21, the apparatus 2100 for transmitting signals comprises:
a transmitting unit 2101 configured to transmit first indication information and/or third indication information to a terminal equipment, the first indication information being used to configure a value range corresponding to a first information field of a first DCI, and the third indication information being used to configure a time-domain resource allocation table for supporting scheduling of more than one PDSCH via one DCI, the time-domain resource allocation table corresponding to the first DCI.

In some embodiments, the first DCI is DCI format 1_1 or DCI format 1_2.

In some embodiments, the first information field is used to determine a first time-domain position, the first time-domain position being used by the terminal equipment to transmit HARQ-ACK information.

In some embodiments, in a case where the network device transmits the first indication information and the third indication information, the value range does not include a first specific value.

In some embodiments, in a case where the network device transmits the first indication information and the value range includes the first specific value, the network device does not transmit the third indication information.

In some embodiments, in a case where the network device transmits the first indication information and the third indication information and the value range includes the first specific value, the network device does not configure and/or activate an SPS for the terminal equipment.

In some embodiments, in a case where the network device configures and/or activates an SPS for the terminal equipment and transmits the first indication information and the third indication information, the value range does not include a first specific value.

In some embodiments, in a case where the network device configures and/or activates an SPS for the terminal equipment, and transmits the first indication information and the value range includes the first specific value, the network device does not transmit the third indication information.

In some embodiments, the following three situations do not exist simultaneously:
the network device transmits the first indication information, and the value range includes a first specific value;
the network device transmits the third indication information; and
the network device configures or activates an SPS for the terminal equipment.

In some embodiments, the first specific value is -1.

The embodiments of the present disclosure further provide an apparatus for receiving signals. The apparatus may, for example, be a terminal equipment, or may be one or more parts or components configured in the terminal equipment.

FIG. 22 is a schematic diagram of an example of an apparatus for receiving signals in the embodiments of the present disclosure, corresponding to the method in the embodiments of the fourth aspect, the contents same as those in the embodiments of the fourth aspect are not repeated. As shown in FIG. 22, the apparatus 2200 for receiving signals comprises:
a receiving unit 2201 configured to receive first indication information and/or third indication information transmitted by a network device, the first indication information being used to configure a value range corresponding to a first information field of a first DCI, and the third indication information being used to configure a time-domain resource assignment table for supporting scheduling of more than one PDSCH via one DCI, the time-domain resource assignment table corresponding to the first DCI.

In some embodiments, the first value is used to determine a first time-domain position, the first time-domain position being used by the terminal equipment to transmit HARQ-ACK information.

In some embodiments, in a case where the receiving unit 2201 receives the first indication information and the third indication information, the receiving unit 2201 does not expect that the value range includes a first specific value.

In some embodiments, in a case where the receiving unit 2201 receives the first indication information and the value range includes the first specific value, the receiving unit 2201 does not expect to receive the third indication information.

In some embodiments, in a case where the receiving unit 2201 receives the first indication information and the third indication information, and the value range includes the first specific value, the receiving unit 2201 does not expect to be configured with and/or activate an SPS.

In some embodiments, in a case where an SPS is configured and/or activated for the terminal equipment and the receiving unit 2201 receives the first indication information and the third indication information, the receiving unit 2201 does not expect that the value range includes a first specific value.

In some embodiments, in a case where an SPS is configured and/or activated for the terminal equipment and the receiving unit 2201 receives the first indication information and the value range includes the first specific value, the receiving unit 2201 does not expect to receive the third indication information.

In some embodiments, the following three situations do not exist simultaneously:
the receiving unit 2201 receives the first indication information and the value range includes the first specific value;
the receiving unit 2201 receives the third indication information; and
an SPS is configured and/or activated for the terminal equipment.

In some embodiments, the first specific value is -1.

The above text is only illustrative for the embodiments of the present disclosure, but the present disclosure is not limited to this, appropriate modifications can be also made based on the above each embodiment. For example, the above embodiments may be used individually, or one or more of the above embodiments may be combined.

It's worth noting that the above only describes components or modules related to the present disclosure, but the present disclosure is not limited to this. The apparatus 1900/2100 for transmitting signals and the apparatus 2000/2200 for receiving signals may further comprise other components or modules. For detailed contents of these components or modules, relevant technologies can be referred to. Moreover, the above components or modules can be realized by a hardware facility such as a processor, a memory, a transmitter, a receiver, etc. The embodiments of the present disclosure have no limitation to this.

As can be known from the above embodiments, feedback of corresponding HARQ-ACK information is supported while supporting scheduling of multiple PDSCHs via one DCI.

### Embodiments of a sixth aspect

The embodiments of the present disclosure further provide a communication system, comprising a network device and a terminal equipment.

In some embodiments, the terminal equipment is configured to perform the method described in the embodiments of the first aspect, and the network device is configured to perform the method described in the embodiments of the second aspect.

In some embodiments, the terminal equipment is configured to perform the method described in the embodiments of the fourth aspect, and the network device is configured to perform the method described in the embodiments of the third aspect.

In some embodiments, the terminal equipment is configured to perform the method described in the embodiments of the first aspect and the embodiments of the fourth aspect, and the network device is configured to perform the method described in the embodiments of the second aspect and the embodiments of the third aspect.

Since each method has been described in details in the embodiments of the first to fourth aspects, its contents are incorporated here and are not repeated.

The embodiments of the present disclosure further provide a terminal equipment, the terminal equipment for example may be a UE, but the present disclosure is not limited to this, it may also be other terminal equipment.

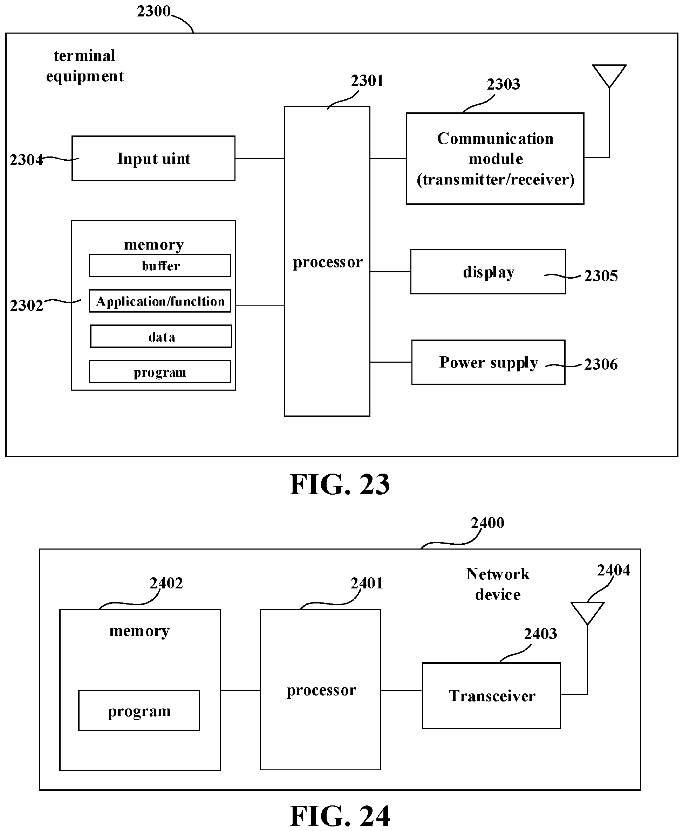

FIG. 23 is a schematic diagram of a terminal equipment in the embodiments of the present disclosure. As shown in FIG. 23, the terminal equipment 2300 may include a processor 2301 and a memory 2302; the memory 2302 stores data and programs, and is coupled to the processor 2301. It's worth noting that this figure is exemplary; other types of structures can also be used to supplement or replace this structure, so as to realize a telecommunication function or other functions.

For example, the processor 2301 can be configured to execute a program to implement the method described in the embodiments of the first aspect and/or the method described in the embodiments of the fourth aspect.

As shown in FIG. 23, the terminal equipment 2300 may further include: a communication module 2303, an input unit 2304, a display 2305 and a power source 2306. The functions of said components are similar to related arts, which are not repeated here. It's worth noting that the terminal equipment 2300 does not have to include all the components shown in FIG. 23, said components are not indispensable. Moreover, the terminal equipment 2300 may also include components not shown in FIG. 23, related arts can be referred to.

The embodiments of the present disclosure further provide a network device, the network device for example may be a base station, but the present disclosure is not limited to this, it may also be other network devices.

FIG. 24 is a composition schematic diagram of a network device in the embodiments of the present disclosure. As shown in FIG. 24, the network device 2400 may include: a processor 2401 and a memory 2402; the memory 2402 is coupled to the processor 2401. The memory 2402 may store various data; moreover, also stores a program for information processing, and executes the program under the control of the processor 2401.

For example, the processor 2401 can be configured to execute a program to implement the method described in the embodiments of the second aspect and/or the third aspect.

In addition, as shown in FIG. 24, the network device 2400 may further comprise: transceivers 2403 and 2404. The functions of said components are similar to related arts, which are not repeated here. It's worth noting that the network device 2400 does not have to include all the components shown in FIG. 24. Moreover, the network device 2400 may also include components not shown in FIG. 24, relevant arts can be referred to.

The embodiments of the present disclosure further provide a computer program, wherein when a terminal equipment executes the program, the program enables the terminal equipment to execute the method described in the embodiments of the first aspect and/or the fourth aspect.

The embodiments of the present disclosure further provide a storage medium in which a computer program is stored, wherein the computer program enables a terminal equipment to execute the method described in the embodiments of the first aspect and/or the fourth aspect.

The embodiments of the present disclosure further provide a computer program, wherein when a network device executes the program, the program enables the network device to execute the method described in the embodiments of the second aspect and/or the third aspect.

The embodiments of the present disclosure further provide a storage medium in which a computer program is stored, wherein the computer program enables a network device to execute the method described in the embodiments of the first aspect and/or the third aspect.

The apparatus and method in the present disclosure can be realized by hardware, or can be realized by combining hardware with software. The present disclosure relates to such a computer readable program, when the program is executed by a logic component, the computer readable program enables the logic component to realize the apparatus described in the above text or a constituent component, or enables the logic component to realize various methods or steps described in the above text. The present disclosure also relates to a storage medium storing the program, such as a hard disk, a magnetic disk, an optical disk, a DVD, a flash memory and the like.

By combining with the method/apparatus described in the embodiments of the present disclosure, it can be directly reflected as hardware, a software executed by a processor, or a combination of the two. For example, one or more in the functional block diagram or one or more combinations in the functional block diagram as shown in the drawings may correspond to software modules of a computer program flow, and may also correspond to hardware modules. These software modules may respectively correspond to the steps as shown in the drawings. These hardware modules can be realized by solidifying these software modules e.g. using a field-programmable gate array (FPGA).

A software module can be located in a RAM memory, a flash memory, a ROM memory, an EPROM memory, an EEPROM memory, a register, a hard disk, a mobile magnetic disk, a CD-ROM or a storage medium in any other form as known in this field. A storage medium can be coupled to a processor, thereby enabling the processor to read information from the storage medium, and to write the information into the storage medium; or the storage medium can be a constituent part of the processor. The processor and the storage medium can be located in an ASIC. The software module can be stored in a memory of a mobile terminal, and may also be stored in a memory card of the mobile terminal. For example, if a device (such as the mobile terminal) adopts a MEGA-SIM card with a larger capacity or a flash memory apparatus with a large capacity, the software module can be stored in the MEGA-SIM card or the flash memory apparatus with a large capacity.

One or more in the functional block diagram or one or more combinations in the functional block diagram as described in the drawings can be implemented as a general-purpose processor for performing the functions described in the present disclosure, a digital signal processor (DSP), an application-specific integrated circuit (ASIC), a field-programmable gate array (FPGA) or other programmable logic device, discrete gate or transistor logic device, discrete hardware components or any combination thereof. One or more in the functional block diagram or one or more combinations in the functional block diagram as described in the drawings can be also implemented as a combination of computer equipment, such as a combination of a DSP and a microprocessor, a plurality of microprocessors, one or more microprocessors combined and communicating with the DSP or any other such configuration.

The present disclosure is described by combining with the specific implementations, however persons skilled in the art should clearly know that these descriptions are exemplary and do not limit the protection scope of the present disclosure. Persons skilled in the art can make various variations and modifications to the present disclosure based on the spirit and principle of the present disclosure, these variations and modifications are also within the scope of the present disclosure.

As for the implementations including the above embodiments, the following supplements are further disclosed:
1. A method for transmitting signals, wherein the method comprises:
   receiving, by a terminal equipment, first downlink control information (DCI) and physical downlink shared channels (PDSCHs) scheduled by the first DCI, the first DCI being used to schedule multiple PDSCHs; and
   at a first time-domain position, transmitting, by the terminal equipment, hybrid automatic repeat request acknowledgement (HARQ-ACK) information to which a PDSCH scheduled by the first DCI corresponds.
2. The method according to Supplement 1, wherein the method further comprises:
   receiving, by the terminal equipment, second DCI, the second DCI indicating the first time-domain position.
3. The method according to Supplement 2, wherein
   a physical downlink control channel (PDCCH) monitoring occasion used to transmit the second DCI is after a PDCCH monitoring occasion used to transmit the first DCI; or,
   a PDCCH monitoring occasion used to transmit the second DCI is not earlier than a PDCCH monitoring occasion used to transmit the first DCI.
4. The method according to Supplement 2, wherein
   the second DCI schedules a PDSCH, or does not schedule a PDSCH.
5. The method according to Supplement 4, wherein the second DCI does not schedule a PDSCH, including:
   the second DCI is used to activate or deactivate an SPS, and/or, the second DCI is used to indicate SCell dormant, and/or, the second DCI adopts DCI format 2_x.
6. The method according to Supplement 2, wherein the first DCI indicates a first PDSCH group index, and the second DCI indicates HARQ-ACK information reporting for the first PDSCH group index.
7. The method according to Supplement 2, wherein the second DCI indicates HARQ-ACK information reporting based on Type-3 HARQ-ACK codebook.
8. The method according to Supplement 2 or 7, wherein the second DCI includes an information field used to request or trigger HARQ-ACK information reporting based on Type-3 HARQ-ACK codebook, a value of the information field being 1.
9. The method according to Supplement 2, wherein the second DCI is used to schedule multiple PDSCHs; or the second DCI is not used to schedule multiple PDSCHs.
10. The method according to any one of Supplements 1 to 9, wherein
   the first DCI schedules one or more PDSCHs, and the terminal equipment receives a semi-persistent scheduled PDSCH (SPS PDSCH) after a last PDSCH scheduled by the first DCI; or
   the first DCI indicates one or more PDSCHs, and the terminal equipment receives an SPS PDSCH after a last PDSCH indicated by the first DCI.
11. The method according to Supplement 10, wherein
   the first time-domain position is not later than a time-domain position to which the SPS PDSCH corresponds, the time-domain position to which the SPS PDSCH corresponds being used to transmit HARQ-ACK information of the SPS PDSCH.
12. The method according to Supplement 10, wherein
   the terminal equipment receives second DCI after a time-domain position to which the SPS PDSCH corresponds, the second DCI indicating the first time-domain position.
13. The method according to any one of Supplements 1 to 12, wherein
   the first DCI does not indicate the first time-domain position.
14. The method according to Supplement 1 or 13, wherein
   the first DCI includes a first information field used to indicate a first time-domain position, the first information field indicating a first specific value.
15. The method according to Supplement 14, wherein
   the first specific value does not have a corresponding first time-domain position.
16. The method according to Supplement 14, wherein the first specific value is -1.
17. The method according to Supplement 13, wherein the first DCI only indicates or schedules one PDSCH.
18. The method according to Supplement 13, wherein the first DCI indicates or schedules multiple PDSCHs, and an SPS is not configured and/or activated for the terminal equipment.
19. The method according to any one of Supplements 1 to 18, wherein the method further comprises:
   receiving, by the terminal equipment, first indication information, the first indication information being used to configure a value range corresponding to a first information field of the first DCI, the value range including a first specific value.
20. The method according to any one of Supplements 1 to 18, wherein the method further comprises:
   transmitting, by the terminal equipment, second indication information, the second indication information being used to indicate at least one of the following:
   whether the terminal equipment supports to feed back HARQ-ACK information to which the PDSCHs scheduled by the first DCI correspond in a case where the first DCI does not indicate the first time-domain position;
   whether the terminal equipment supports to feed back HARQ-ACK information to which the PDSCHs scheduled by the first DCI correspond in a case where the first DCI indicates multiple PDSCHs and does not indicate the first time-domain position;
   whether the terminal equipment supports to feed back HARQ-ACK information to which the PDSCHs scheduled by the first DCI correspond in a case where the first DCI schedules multiple PDSCHs and does not indicate the first time-domain position;
   when an SPS is configured and/or activated, whether the terminal equipment supports to feed back HARQ-ACK information to which the PDSCHs scheduled by the first DCI correspond in a case where the first DCI does not indicate the first time-domain position;
   when an SPS is configured and/or activated, whether the terminal equipment supports to feed back HARQ-ACK information to which the PDSCHs scheduled by the first DCI correspond in a case where the first DCI indicates multiple PDSCHs and does not indicate the first time-domain position; and
   when an SPS is configured and/or activated, whether the terminal equipment supports to feed back HARQ-ACK information to which the PDSCHs scheduled by the first DCI correspond in a case where the first DCI schedules multiple PDSCHs and does not indicate the first time-domain position.
21. A method for receiving signals, wherein the method comprises:
   transmitting, by a network device, first downlink control information (DCI) and physical downlink shared channels (PDSCHs) scheduled by the first DCI, the first DCI being used to schedule multiple PDSCHs; and
   at a first time-domain position, receiving, by the network device, hybrid automatic repeat request acknowledgement (HARQ-ACK) information to which a PDSCH scheduled by the first DCI corresponds.
22. The method according to Supplement 21, wherein the method further comprises:
   transmitting, by the network device, second DCI, the second DCI indicating the first time-domain position.
23. The method according to Supplement 22, wherein
   a physical downlink control channel (PDCCH) monitoring occasion used to transmit the second DCI is after a PDCCH monitoring occasion used to transmit the first DCI; or,
   a PDCCH monitoring occasion used to transmit the second DCI is not earlier than a PDCCH monitoring occasion used to transmit the first DCI.
24. The method according to Supplement 22, wherein
   the second DCI schedules a PDSCH, or does not schedule a PDSCH.
25. The method according to Supplement 24, wherein the second DCI does not schedule a PDSCH, including:
   the second DCI is used to activate or deactivate an SPS, and/or, the second DCI is used to indicate SCell dormant, and/or, the second DCI adopts DCI format 2_x.
26. The method according to Supplement 22, wherein the first DCI indicates a first PDSCH group index, and the second DCI indicates HARQ-ACK information reporting for the first PDSCH group index.
27. The method according to Supplement 22, wherein the second DCI indicates HARQ-ACK information reporting based on Type-3 HARQ-ACK codebook.
28. The method according to Supplement 22 or 27, wherein the second DCI includes an information field used to request or trigger HARQ-ACK information reporting based on Type-3 HARQ-ACK codebook, a value of the information field being 1.
29. The method according to Supplement 22, wherein the second DCI is used to schedule multiple PDSCHs; or the second DCI is not used to schedule multiple PDSCHs.
30. The method according to any one of Supplements 21 to 29, wherein
   the first DCI schedules one or more PDSCHs, and the network device transmits a semi-persistent scheduled PDSCH (SPS PDSCH) after a last PDSCH scheduled by the first DCI; or
   the first DCI indicates one or more PDSCHs, and the network device transmits an SPS PDSCH after a last PDSCH indicated by the first DCI.
31. The method according to Supplement 30, wherein
   the first time-domain position is not later than a time-domain position to which the SPS PDSCH corresponds, the time-domain position to which the SPS PDSCH corresponds being used to transmit HARQ-ACK information of the SPS PDSCH.
32. The method according to Supplement 30, wherein
   the network device transmits second DCI after a time-domain position to which the SPS PDSCH corresponds, the second DCI indicating the first time-domain position.
33. The method according to any one of Supplements 21 to 32, wherein
   the first DCI does not indicate the first time-domain position.
34. The method according to Supplement 21 or 33, wherein
   the first DCI includes a first information field used to indicate a first time-domain position, the first information field indicating a first specific value.
35. The method according to Supplement 34, wherein the first specific value does not have a corresponding first time-domain position.
36. The method according to Supplement 34, wherein the first specific value is -1.
37. The method according to Supplement 33, wherein the first DCI only indicates or schedules one PDSCH.
38. The method according to Supplement 33, wherein the first DCI indicates or schedules multiple PDSCHs, and an SPS is not configured and/or activated for the terminal equipment.
39. The method according to any one of Supplements 21 to 38, wherein the method further comprises:
   transmitting, by the network device, first indication information, the first indication information being used to configure a value range corresponding to a first information field of the first DCI, the value range including a first specific value.
40. The method according to any one of Supplements 21 to 38, wherein the method further comprises:
   receiving, by the network device, second indication information, the second indication information being used to indicate at least one of the following:
   whether the terminal equipment supports to feed back HARQ-ACK information to which the PDSCHs scheduled by the first DCI correspond in a case where the first DCI does not indicate the first time-domain position;
   whether the terminal equipment supports to feed back HARQ-ACK information to which the PDSCHs scheduled by the first DCI correspond in a case where the first DCI indicates multiple PDSCHs and does not indicate the first time-domain position;
   whether the terminal equipment supports to feed back HARQ-ACK information to which the PDSCHs scheduled by the first DCI correspond in a case where the first DCI schedules multiple PDSCHs and does not indicate the first time-domain position;
   when an SPS is configured and/or activated, whether the terminal equipment supports to feed back HARQ-ACK information to which the PDSCHs scheduled by the first DCI correspond in a case where the first DCI does not indicate the first time-domain position;
   when an SPS is configured and/or activated, whether the terminal equipment supports to feed back HARQ-ACK information to which the PDSCHs scheduled by the first DCI correspond in a case where the first DCI indicates multiple PDSCHs and does not indicate the first time-domain position; and
   when an SPS is configured and/or activated, whether the terminal equipment supports to feed back HARQ-ACK information to which the PDSCHs scheduled by the first DCI correspond in a case where the first DCI schedules multiple PDSCHs and does not indicate the first time-domain position.
41. A method for transmitting signals, wherein the method comprises:
   transmitting, by a network device, first indication information and/or third indication information to a terminal equipment, the first indication information being used to configure a value range corresponding to a first information field of a first DCI, and the third indication information being used to configure a time-domain resource assignment table for supporting scheduling of multiple PDSCHs via one DCI, the time-domain resource assignment table corresponding to the first DCI.
42. The method according to Supplement 41, wherein the first DCI is DCI format 1_1 or DCI format 1_2.
43. The method according to Supplement 41, wherein
   the first information field is used to determine a first time-domain position, the first time-domain position being used by the terminal equipment to transmit HARQ-ACK information.
44. The method according to Supplement 41, wherein
   in a case where the network device transmits the first indication information and the third indication information, the value range does not include a first specific value; or, in a case where the network device transmits the first indication information and the value range includes the first specific value, the network device does not transmit the third indication information.
45. The method according to Supplement 44, wherein
   in a case where the network device transmits the first indication information and the third indication information and the value range includes the first specific value, the network device does not configure and/or activate an SPS for the terminal equipment;
   or, in a case where the network device configures and/or activates an SPS for the terminal equipment and transmits the first indication information and the third indication information, the value range does not include a first specific value;
   or, in a case where the network device configures and/or activates an SPS for the terminal equipment, and transmits the first indication information and the value range includes the first specific value, the network device does not transmit the third indication information.
46. The method according to Supplement 41, wherein the following three situations do not exist simultaneously:
   the network device transmits the first indication information, and the value range includes a first specific value;
   the network device transmits the third indication information; and
   the network device configures or activates an SPS for the terminal equipment.
47. The method according to any one of Supplements 44-46, wherein the first specific value is -1.
48. A method for receiving signals, wherein the method comprises:
   receiving, by a terminal equipment, first indication information and/or third indication information transmitted by a network device, the first indication information being used to configure a value range corresponding to a first information field of a first DCI, and the third indication information being used to configure a time-domain resource assignment table for supporting scheduling of multiple PDSCHs via one DCI, the first DCI applying the time-domain resource assignment table.
49. The method according to Supplement 48, wherein
   the first value is used to determine a first time-domain position, the first time-domain position being used by the terminal equipment to transmit HARQ-ACK information.
50. The method according to Supplement 48, wherein
   in a case where the terminal equipment receives the first indication information and the third indication information, the terminal equipment does not expect that the value range includes a first specific value; or, in a case where the terminal equipment receives the first indication information and the value range includes the first specific value, the terminal equipment does not expect to receive the third indication information.
51. The method according to Supplement 50, wherein
   in a case where the terminal equipment receives the first indication information and the third indication information, and the value range includes the first specific value, the terminal equipment does not expect to be configured with and/or activate an SPS;
   or, in a case where an SPS is configured and/or activated for the terminal equipment and the terminal equipment receives the first indication information and the third indication information, the terminal equipment does not expect that the value range includes a first specific value;
   or, in a case where an SPS is configured and/or activated for the terminal equipment and the terminal equipment receives the first indication information and the value range includes the first specific value, the terminal equipment does not expect to receive the third indication information.
52. The method according to Supplement 48, wherein the following three situations do not exist simultaneously:
   the terminal equipment receives the first indication information, and the value range includes a first specific value;
   the terminal equipment receives the third indication information; and
   an SPS is configured and/or activated for the terminal equipment.
53. The method according to any one of Supplements 50 to 52, wherein the first specific value is -1.
54. A terminal equipment, comprising a memory and a processor, the memory storing a computer program, and the processor being configured to execute the computer program to realize the method according to any one of Supplements 1 to 20 or the method according to any one of Supplements 48 to 53.
55. A network device, comprising a memory and a processor, the memory storing a computer program, and the processor being configured to execute the computer program to realize the method according to any one of Supplements 21 to 40 or the method according to any one of Supplements 41 to 47.
56. A communication system, comprising the network device according to Supplement 55 and the terminal equipment according to Supplement 54.

## Claims

1. An apparatus for transmitting signals, configured in a terminal equipment, wherein the apparatus comprises:
a receiving unit configured to receive first downlink control information (DCI) and physical downlink shared channels (PDSCHs) scheduled by the first DCI, the first DCI being used to schedule multiple PDSCHs; and
a transmitting unit configured to, at a first time-domain position, transmit hybrid automatic repeat request acknowledgement (HARQ-ACK) information to which a PDSCH scheduled by the first DCI corresponds.

2. The apparatus according to claim 1, wherein,
the receiving unit further receives second DCI, the second DCI indicating the first time-domain position.

3. The apparatus according to claim 2, wherein,
a physical downlink control channel (PDCCH) monitoring occasion used to transmit the second DCI is after a PDCCH monitoring occasion used to transmit the first DCI; or,
a PDCCH monitoring occasion used to transmit the second DCI is not earlier than a PDCCH monitoring occasion used to transmit the first DCI.

4. The apparatus according to claim 1, wherein,
the first DCI does not indicate the first time-domain position.

5. The apparatus according to claim 1, wherein,
the first DCI includes a first information field used to indicate a first time-domain position, the first information field indicating a first specific value.

6. The apparatus according to claim 1, wherein,
the first DCI schedules one or more PDSCHs, and the receiving unit receives a semi-persistent scheduled PDSCH (SPS PDSCH) after a last PDSCH scheduled by the first DCI; or
the first DCI indicates one or more PDSCHs, and the receiving unit receives an SPS PDSCH after a last PDSCH indicated by the first DCI.

7. The apparatus according to claim 6, wherein,
the first time-domain position is not later than a time-domain position to which the SPS PDSCH corresponds, the time-domain position to which the SPS PDSCH corresponds being used to transmit HARQ-ACK information of the SPS PDSCH.

8. The apparatus according to claim 6, wherein,
the receiving unit receives second DCI after a time-domain position to which the SPS PDSCH corresponds, the second DCI indicating the first time-domain position.

9. The apparatus according to claim 4, wherein the first DCI only indicates or schedules one PDSCH; or, the first DCI indicates or schedules multiple PDSCHs, and an SPS is not configured and/or activated for the terminal equipment.

10. The apparatus according to claim 1, wherein,
the transmitting unit further transmits second indication information, the second indication information being used to indicate at least one of the following:
whether the terminal equipment supports to feed back HARQ-ACK information to which the PDSCHs scheduled by the first DCI correspond in a case where the first DCI does not indicate the first time-domain position;
whether the terminal equipment supports to feed back HARQ-ACK information to which the PDSCHs scheduled by the first DCI correspond in a case where the first DCI indicates multiple PDSCHs and does not indicate the first time-domain position;
whether the terminal equipment supports to feed back HARQ-ACK information to which the PDSCHs scheduled by the first DCI correspond in a case where the first DCI schedules multiple PDSCHs and does not indicate the first time-domain position;
when an SPS is configured and/or activated, whether the terminal equipment supports to feed back HARQ-ACK information to which the PDSCHs scheduled by the first DCI correspond in a case where the first DCI does not indicate the first time-domain position;
when an SPS is configured and/or activated, whether the terminal equipment supports to feed back HARQ-ACK information to which the PDSCHs scheduled by the first DCI correspond in a case where the first DCI indicates multiple PDSCHs and does not indicate the first time-domain position; and
when an SPS is configured and/or activated, whether the terminal equipment supports to feed back HARQ-ACK information to which the PDSCHs scheduled by the first DCI correspond in a case where the first DCI schedules multiple PDSCHs and does not indicate the first time-domain position.

11. An apparatus for receiving signals, configured in a network device, wherein the apparatus comprises:
a transmitting unit configured to transmit first downlink control information (DCI) and physical downlink shared channels (PDSCHs) scheduled by the first DCI, the first DCI being used to schedule multiple PDSCHs; and
a receiving unit configured to, at a first time-domain position, receive hybrid automatic repeat request acknowledgement (HARQ-ACK) information to which a PDSCH scheduled by the first DCI corresponds.

12. The apparatus according to claim 11, wherein,
the transmitting unit further transmit second DCI, the second DCI indicating the first time-domain position.

13. The apparatus according to claim 12, wherein,
a physical downlink control channel (PDCCH) monitoring occasion used to transmit the second DCI is after a PDCCH monitoring occasion used to transmit the first DCI; or,
a PDCCH monitoring occasion used to transmit the second DCI is not earlier than a PDCCH monitoring occasion used to transmit the first DCI.

14. The apparatus according to claim 11, wherein,
the first DCI does not indicate the first time-domain position.

15. The apparatus according to claim 11, wherein,
the first DCI includes a first information field used for indicating a first time-domain position, the first information field indicating a first specific value.

16. The apparatus according to claim 11, wherein,
the first DCI schedules one or more PDSCHs, and the transmitting unit transmits a semi-persistent scheduled PDSCH (SPS PDSCH) after a last PDSCH scheduled by the first DCI; or
the first DCI indicates one or more PDSCHs, and the transmitting unit transmits a SPS PDSCH after a last PDSCH indicated by the first DCI.

17. The apparatus according to claim 16, wherein,
the first time-domain position is not later than a time-domain position to which the SPS PDSCH corresponds, the time-domain position to which the SPS PDSCH corresponds being used to transmit HARQ-ACK information of the SPS PDSCH.

18. The apparatus according to claim 16, wherein,
the transmitting unit transmits second DCI after a time-domain position to which the SPS PDSCH corresponds, the second DCI indicating the first time-domain position.

19. The apparatus according to claim 14, wherein the first DCI only indicates or schedules one PDSCH; or, the first DCI indicates or schedules multiple PDSCHs, and an SPS is not configured and/or activated for the terminal equipment.

20. The apparatus according to claim 11, wherein,
the receiving unit further receives second indication information, the second indication information being used to indicate at least one of the following:
whether the terminal equipment supports to feed back HARQ-ACK information to which the PDSCHs scheduled by the first DCI correspond in a case where the first DCI does not indicate the first time-domain position;
whether the terminal equipment supports to feed back HARQ-ACK information to which the PDSCHs scheduled by the first DCI correspond in a case where the first DCI indicates multiple PDSCHs and does not indicate the first time-domain position;
whether the terminal equipment supports to feed back HARQ-ACK information to which the PDSCHs scheduled by the first DCI correspond in a case where the first DCI schedules multiple PDSCHs and does not indicate the first time-domain position;
when an SPS is configured and/or activated, whether the terminal equipment supports to feed back HARQ-ACK information to which the PDSCHs scheduled by the first DCI correspond in a case where the first DCI does not indicate the first time-domain position;
when an SPS is configured and/or activated, whether the terminal equipment supports to feed back HARQ-ACK information to which the PDSCHs scheduled by the first DCI correspond in a case where the first DCI indicates multiple PDSCHs and does not indicate the first time-domain position; and
when an SPS is configured and/or activated, whether the terminal equipment supports to feed back HARQ-ACK information to which the PDSCHs scheduled by the first DCI correspond in a case where the first DCI schedules multiple PDSCHs and does not indicate the first time-domain position.
